(19) **Europäisches Patentamt European Patent Office Office européen des brevets**

(11) **EP 3 670 128 B1**

(12) **FASCICULE DE BREVET EUROPEEN**

(45) Date de publication et mention de la délivrance du brevet:
**20.07.2022 Bulletin 2022/29**

(21) Numéro de dépôt: **18306720.6**

(22) Date de dépôt: **18.12.2018**

(51) Classification Internationale des Brevets (IPC):
***B29B 15/12*** *(2006.01)*

(52) Classification Coopérative des Brevets (CPC):
**B29B 15/12**

(54) **PROCEDE DE FABRICATION D'UN MATERIAU FIBREUX PRE-IMPREGNE DE POLYMERE THERMOPLASTIQUE EN LIT FLUIDISE**

HERSTELLUNGSVERFAHREN EINES FASERMATERIALS, DAS MIT THERMOPLASTISCHEM POLYMER IN EINER WIRBELSCHICHT VORIMPRÄGNIERT IST

METHOD FOR PRODUCING A FIBROUS MATERIAL PRE-IMPREGNATED WITH THERMOPLASTIC POLYMER IN A FLUIDISED BED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**24.06.2020 Bulletin 2020/26**

(73) Titulaire: **Arkema France**
**92700 Colombes (FR)**

(72) Inventeurs:
• **HOCHSTETTER, Gilles**
**92705 Colombes CEDEX (FR)**
• **SAVART, Thibault**
**64170 Lacq (FR)**
• **BABEAU, Arthur**
**64170 Lacq (FR)**
• **SALINIER, Axel**
**64170 Lacq (FR)**

(56) Documents cités:
**EP-A2- 0 300 321**     **WO-A1-2018/115736**
**WO-A1-2018/115737**   **WO-A1-2018/115738**

**Description**

La présente invention concerne un procédé de fabrication d'un matériau fibreux pré-imprégné de polymère thermoplastique en lit fluidisé.

Plus particulièrement, l'invention se rapporte à un procédé de fabrication d'un matériau fibreux pré-imprégné comprenant une étape de pré-imprégnation d'un matériau fibreux non ensimé ou faiblement ensimé pour la préparation d'un matériau fibreux imprégné, notamment à cœur, de porosité réduite et contrôlée, en vue de l'obtention de rubans de matériau fibreux imprégné, de dimensions calibrées, directement utilisables pour la fabrication de pièces composites tridimensionnelles. Dans la présente description, on entend par « matériau fibreux » un assemblage de fibres de renfort. Avant sa pré-imprégnation et sa mise en forme, il se présente sous forme de mèches. Après sa mise en forme et l'imprégnation, notamment à cœur des mèches de fibres, il se présente sous forme de rubans (ou tapes), de bandes, ou de nappes. Lorsque les fibres de renfort sont continues, leur assemblage constitue un tissu ou un non tissé (NCF). Lorsque les fibres sont courtes, leur assemblage constitue un feutre ou un mat de fibre.

Dans la présente description, on utilise le terme « bande » pour désigner des bandes de matériau fibreux dont la largeur est supérieure ou égale à 400mm. On utilise le terme « ruban » pour désigner des rubans de largeur calibrée et inférieure ou égale à 400mm.

Le terme « mèche » est également employé pour désigner le matériau fibreux.

De tels matériaux fibreux pré-imprégnés sont notamment destinés à la réalisation de matériaux composites légers pour la fabrication de pièces mécaniques ayant une structure à trois dimensions et possédant de bonnes propriétés mécaniques, et thermiques. Lorsque les fibres sont en carbone ou que la résine est chargée d'additifs adaptés, ces matériaux fibreux sont capables d'évacuer des charges électrostatiques. Ils possèdent donc des propriétés compatibles avec la fabrication de pièces notamment dans les domaines de la mécanique, de l'aéronautique civile ou militaire, et nautique, de l'automobile, du pétrole et du gaz, en particulier l'offshore, du stockage de gaz, de l'énergie, de la santé et du médical, de l'armée et de l'armement, des sports et loisirs, et de l'électronique.

Cependant, l'utilisation de fibres non ensimées est une nécessité pour l'aéronautique et l'offshore. En effet, en particulier pour fabriquer des pièces structurelles et/ou soumises à des environnements chimiques/thermiques extrêmes, il est nécessaire que non seulement le polymère utilisé soit capable de résister aux contraintes de la pièce ; mais il est aussi nécessaire que l'interface fibre/matrice soit la meilleure possible pour une meilleure résistance du composite, aussi bien en transmission d'efforts mécaniques de la résine vers les fibres que de résistance chimique par exemple. Les forces de ces liens entre la matrice et les fibres sont dictées par la qualité d'imprégnation du matériau (porosité limitée) et par la nature des liens physico-chimiques voire mécaniques entre la fibre et la matrice polymère.

Dans le but d'améliorer les liens physico-chimiques entre polymère et fibres, les fabricants de fibres utilisent des ensimages dont la composition et le taux peuvent varier. Or, étant généralement de nature organique (type résine thermodurcissable ou thermoplastique) et très souvent formulés pour l'imprégnation des fibres par des polymères à bas point de fusion ou thermodurcissables à bas point de Tg, les ensimages sont souvent dégradés par les procédés d'imprégnation, notamment pendant les étapes de pré-imprégnation (voie fondue, passage en solution solvantée etc...) et/ou pendant les étapes de fusion de la matrice thermoplastique, notamment lorsqu'elle présente un haut point de fusion (pour un semi-cristalin ou une haute Tg (pour un amorphe ou un thermodurcissable). En outre, la compatibilité chimique entre le polymère de la matrice et l'ensimage n'est pas toujours optimale ; la force d'accroché résultante pouvant être modifiée en positif comme en négatif en comparaison de celle observée avec une fibre non ensimée.

Cela pose donc un certain nombre de difficultés pour la fabrication de tapes au moyen d'un procédé de pré-imprégnation par une poudre (ou un mélange de poudres) sèche(s), en particulier dans le cas où chaque mèche est pré-imprégnée de poudre séparément des autres. Dans la plupart des cas, la ou les mèches sont guidées par des pièces d'embarrages (généralement sous forme de rouleaux) placés dans une cuve contenant soit le lit fluidisé, soit une dispersion aqueuse.

Ainsi la demande internationale WO2018115736 décrit-elle un procédé de pré-imprégnation d'un matériau fibreux en lit fluidisé dont le taux de poudre dépend du temps de séjour dans le lit fluide et la tension sur la ou les mèches est contrôlée à l'aide d'un cantre présent avant la cuve comprenant le lit fluidisé.

L'utilisation d'au moins un embarrage (en particulier un rouleau cylindrique de forme convexe, concave ou cylindrique) dans le lit fluidisé permet d'améliorer la pré-imprégnation par rapport aux procédés de l'art antérieur et le matériau fibreux utilisé peut être ensimé ou non ensimé.

Il n'est nullement précisé dans cette demande si les rouleaux utilisés sont lisses ou gorgés (ou crantés).

L'article de Gibson A. et al. (composites manufacturing, Vol. 3, N°4 (1992)) décrit une étape de pré-imprégnation en lit fluidisé d'un matériau fibreux par un polymère thermoplastique comprenant des rouleaux lisses dans le lit fluidisé avec contrôle du taux de fibre au moyen d'un système vibrant placé en sortie de cuve.

Néanmoins, lorsque ces rouleaux sont lisses, le fait que les fibres soient non ensimées conduit à un épanouissement de la mèche de fibres très important et surtout très fluctuant, ce qui impacte directement le taux de poudre emporté par la ou les mèches de fibres et rend ce taux variable et incontrôlé.

Dans des conditions de faible tension, que les fibres soit ensimées ou non, le contrôle du temps de séjour ne suffit plus pour contrôler le taux de poudre et la trop faible tension provoque une torsion et/ou un enroulement des mèches (twist).

Cependant, dans le cas des fibres non ensimées, une tension trop importante des fibres provoque l'endommagement de ces dernières au contact des rouleaux et produisent beaucoup de fibrilles coupées (fuzz en anglais) qui polluent le lit fluidisé et perturbent la qualité de la fluidisation et donc la qualité de pré-imprégnation du tape.

Il est par conséquent nécessaire de pouvoir contrôler le taux de poudre avec des fibres non ensimées et ce de manière continue dans le temps sans les endommager. L'invention a donc pour but de remédier aux inconvénients de l'art antérieur. L'invention a donc pour objet un procédé de fabrication d'un matériau fibreux pré-imprégné comprenant un matériau fibreux en fibres continues et au moins une matrice polymère thermoplastique, comprenant une étape de pré-imprégnation, en particulier homogène, dudit matériau fibreux se présentant sous forme d'une mèche ou de plusieurs mèches parallèles par au moins une matrice polymère thermoplastique se présentant sous forme de poudre, ladite étape de pré-imprégnation étant effectuée sur un matériau fibreux non ensimé dans une cuve comprenant un lit fluidisé muni de rouleaux cylindriques gorgés.

L'invention se rapporte également à un ruban unidirectionnel de matériau fibreux imprégné, en particulier ruban enroulé sur bobine, caractérisé en ce qu'il est obtenu par un procédé tel que défini ci-dessus.

L'invention porte en outre sur une utilisation du ruban tel que défini ci-dessus dans la fabrication de pièces en trois dimensions. Ladite fabrication desdites pièces composites concerne les domaines des transports, en particulier automobile, du pétrole et du gaz, en particulier l'offshore, du stockage de gaz, aéronautique civile ou militaire, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la sécurité et de l'électronique.

L'invention concerne également une pièce composite en trois dimensions, caractérisée en ce qu'elle résulte de l'utilisation d'au moins un ruban unidirectionnel de matériau fibreux imprégné tel que défini ci-dessus.

L'invention a pour objet un procédé de fabrication d'un matériau fibreux pré-imprégné comprenant un matériau fibreux en fibres continues et au moins une matrice polymère thermoplastique, caractérisé en ce que ledit matériau fibreux pré-imprégné est réalisé en un ruban unique unidirectionnel ou en une pluralité de rubans parallèles unidirectionnels et en ce que ledit procédé comprend une étape de pré-imprégnation, en particulier homogène, dudit matériau fibreux se présentant sous forme d'une mèche (81a) ou de plusieurs mèches parallèles par ladite au moins une matrice polymère thermoplastique se présentant sous forme de poudre, ladite étape de pré-imprégnation étant effectuée par voie sèche dans une cuve (20) comprenant un lit fluidisé (22) comprenant au moins une pièce d'embarrage gorgée (82),

ladite mèche (81a) ou lesdites mèches étant en contact avec une partie ou la totalité de la surface de ladite au moins une pièce d'embarrage gorgée (82) et ladite mèche (81a) ou lesdites mèches comprenant jusqu'à 0,1 % en poids d'ensimage,
et le contrôle du taux de ladite au moins une matrice polymère thermoplastique dans ledit matériau fibreux étant effectué par contrôle du temps de séjour dudit matériau fibreux dans la poudre et par contrôle constant de la tension de ladite mèche (81a) ou desdites mèches lorsqu'elle(s) pénètre(nt) dans le lit fluidisé.

Avantageusement, le procédé de l'invention est à l'exclusion de tout procédé électrostatique en charge volontaire.

Le terme « ensimage » désigne les traitements de surface appliqués aux matériaux fibreux lors de leur fabrication. Il peut aussi désigner un prétraitement fugace en préambule de l'étape de pré-imprégnation, qu'il soit fait directement en ligne avec l'imprégnation ou non. Il peut aussi désigner un prétraitement fugace en préambule de l'étape de pré-imprégnation, qu'il soit fait directement en ligne avec l'imprégnation ou non.

Ils sont généralement de nature organique (type résine thermodurcissable ou thermoplastique) et très souvent formulés pour la pré-imprégnation des fibres de renfort par des polymères à bas point de fusion Tf ou thermodurcissables à bas point de Tg.

Ces ensimages sont également utiles pour protéger les fibres sèches d'un endommagement lors d'un contact avec un système de guidage.

Ledit matériau fibreux peut donc comprendre jusqu'à 0,1 % en poids d'un matériau de nature organique (type résine thermodurcissable ou thermoplastique) dénommé ensimage.

Dans le cas d'un prétraitement fugace réalisé par l'imprégnateur par exemple en préambule de l'étape la pré-imprégnation des fibres de renfort, l'ensimage peut être un liquide organique comme de l'eau, un alcool à bas ou haut poids moléculaire (éthanol, méthanol, isopropanol par exemple), une cétone (acétone etc...) qui jouera le rôle d'ensimage fugace ; c'est-à-dire qu'il sera présent un court laps de temps en contact avec la fibre pour permettre sa manipulation à l'état « sec » (i.e. avant la pré-imprégnation) et qu'il sera ensuite extrait du matériau composite pour ne pas perturber les caractéristiques finales du composite.

Avantageusement, ladite mèche (81a) ou lesdites mèches est(sont) non ensimées en particulier dans le cas d'une résine thermoplastique amorphe présentant une haute Tg ou d'une résine semi-cristalline à haut point de fusion : dans ces cas l'ensimage se dégrade lorsqu'il est soumis à la haute température des procédés de transformation imposée par la nature de ces résines.

Cela signifie que ladite mèche (81a) ou lesdites mèches est(sont) soit substantiellement dépourvue d'ensimage par ce que le matériau fibreux a été au préalable dé-ensimé ou soit dépourvue d'ensimage parce que le matériau fibreux d'origine est non ensimé.

Pour le dé-ensimage, plusieurs solutions existent:

- chauffage en milieu chargé en humidité car généralement les ensimages sont déposés en solution base aqueuse lors de la fabrication des fibres car généralement c'est un traitement préalable des bobines, sinon il est nécessaire de mettre en ligne avec le procédé de pré-imprégnation :
- une dégradation thermique
- un plongeon dans un solvant de l'ensimage (eau ou autre solvant organique). Avantageusement, le diamètre moyen D50 en volume des particules de poudre de polymère thermoplastique est compris de 30 à 300 $\mu$m, notamment de 50 à 200 $\mu$m, plus particulièrement de 70 à 200$\mu$m.

L'expression « temps de séjour dans la poudre» signifie le temps durant lequel la mèche est en contact avec ladite poudre dans le lit fluidisé.

Les Inventeurs ont trouvé de manière inattendue que lorsqu'un matériau fibreux non ensimé est utilisé pour l'étape de pré-imprégnation en lit fluidisé, le contrôle du temps de séjour dans la poudre n'était plus suffisant pour pré-imprégner le matériau fibreux par la matrice polymère thermoplastique, en particulier de manière homogène avec un taux de poudre (résine) bien contrôlé et que l'étape de pré-imprégnation nécessitait la présence d'un ou plusieurs rouleau(x) gorgés dans le lit fluidisé avec contrôle simultané de la tension dudit matériau fibreux à l'entrée du lit fluidisé.

Il existe une tension critique dénommée Tc qui conduit à l'endommagement des fibres (fuzz) et une tension Tc' au-delà de laquelle l'imprégnation devient impossible car la tension bloque alors l'épanouissement de la mèche dans le lit fluidisé. Généralement, dans le cas des fibres non ensimées, Tc est < à Tc'.

Il existe également une Tmin qui est la tension en dessous de laquelle les twists apparaissent.

Avantageusement, la tension T de ladite mèche (81a) ou desdites mèches lorsqu'elle(s) pénètre(nt) dans le lit fluidisé est inférieure à Tc.

Avantageusement, la tension T de ladite mèche (81a) ou desdites mèches lorsqu'elle(s) pénètre(nt) dans le lit fluidisé est supérieure à Tmin.

Avantageusement, la tension T de ladite mèche (81a) ou desdites mèches lorsqu'elle(s) pénètre(nt) dans le lit fluidisé est inférieure à Tc et supérieure à Tmin. Dans toute la description, le matériau fibreux après passage dans le lit fluidisé est dénommé matériau fibreux pré-imprégné et après chauffage et/ou calandrage, il est dénommé matériau fibreux imprégné.

Les mesures du taux de fibre et de la porosité sont effectuées sur le matériau fibreux imprégné, et donc après chauffage et/ou calandrage.

Le terme « homogène » signifie que la pré-imprégnation est uniforme et qu'il n'existe pas de fibres sèches en surface du matériau fibreux pré-imprégné.

## Matrice polymère

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice de pré-imprégnation du matériau fibreux, c'est avantageusement un polymère thermoplastique ou un mélange de polymères thermoplastiques. Ce polymère ou mélange de polymères thermoplastiques est broyé sous forme de poudre, afin de pouvoir l'utiliser dans un dispositif tel qu'une cuve, notamment en lit fluidisé.

Le dispositif sous forme de cuve, notamment en lit fluidisé peut être ouvert ou fermé. De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la lubrification de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant ou un mélange de ceux-ci.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au cœur des fibres. Selon la nature du polymère, ou mélange de polymères thermoplastiques, utilisé pour réaliser la matrice de pré-imprégnation, notamment sa température de fusion, on choisira l'un ou l'autre de ces composés.

Les polymères thermoplastiques entrant dans la constitution de la matrice de pré-imprégnation du matériau fibreux, peuvent être choisis parmi :

- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE), et leurs mélanges.

Avantageusement, lorsque ledit polymère thermoplastique est en mélange, il est additionné sous forme de poudre obtenue au préalable par « dry blend » ou compound broyé ou directement dans la cuve sous forme de « dry blend in situ». Avantageusement, il est additionné sous forme de poudre obtenue au préalable par « dry blend » ou directement dans la cuve sous forme de « dry blend in situ» et le mélange est un mélange de PEKK et de PEI.

Avantageusement, lorsque ledit polymère est un mélange de deux polymères P1 et P2, la proportion en poids de polymère P1 et P2 est comprise de 1-99% à 99-1%. Avantageusement, le mélange PEKK/PEI est compris de 90-10% à 60-40% en poids, en particulier de 90-10% à 70-30% en poids.

Le polymère thermoplastique peut correspondre au polymère final non réactif qui imprégnera le matériau fibreux ou à un prépolymère réactif, qui imprégnera également le matériau fibreux, mais est susceptible de réagir sur lui-même ou avec un autre prépolymère, en fonction des fins de chaîne portées par ledit prépolymère, après pré-imprégnation, ou encore avec un allongeur de chaîne et notamment lors d'un chauffage au niveau des embarrages dans le four et/ou lors de la mise en œuvre de la tape dans le procédé final de fabrication de la pièce composite.

Selon une première possibilité, ledit prépolymère peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, plus particulièrement avec X' et Y' étant amine et carboxy ou carboxy et amine respectivement. Selon une deuxième possibilité, ledit prépolymère peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Selon une troisième possibilité, ledit prépolymère peut comprendre ou être constituée de, au moins un prépolymère dudit polymère polyamide thermoplastique, porteur de n fonctions réactives terminales X, choisies parmi : $-NH_2$, $-CO_2H$ et $-OH$, de préférence $NH_2$ et $-CO_2H$ avec n étant 1 à 3, de préférence de 1 à 2, plus préférentiellement 1 ou 2, plus particulièrement 2 et au moins un allongeur de chaîne Y-A'-Y, avec A' étant un biradical hydrocarboné, de structure non polymère, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

La masse moléculaire moyenne en nombre $M_n$ dudit polymère final de la matrice thermoplastique est de préférence dans une plage allant de 10000 à 40000, de préférence de 12000 à 30000. Ces valeurs $M_n$ peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères réactifs selon les deux options citées plus haut, ont une masse moléculaire moyenne en nombre $M_n$ allant de 500 à 10000, de préférence de 1000 à 6000, en particulier de 2500 à 6000.

Les $M_n$ sont déterminées en particulier par le calcul à partir du taux des fonctions terminales déterminé par titration potentiométrique en solution et la fonctionnalité desdits prépolymères. Les masses $M_n$ peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les polymères de constitution de la matrice sont choisis parmi les Polyamides (PA), en particulier choisis parmi les polyamides aliphatiques, notamment le PA11 et le PA12, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Polyethercétonecétone (PEKK), le Polyetherethercétone (PEEK), les polymères fluorés comme le poly(fluorure de vinylidène) (PVDF).

Pour les polymères fluorés, on peut utiliser un homopolymère du fluorure de vinylidène (VDF de formule $CH_2=CF_2$) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique à la pièce de structure, surtout lorsqu'elle est soumise à des contraintes thermiques et chimiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK (PolyArylEtherKetone) tels que les polyéther cétones PEK, le poly(éther éther cétone) PEEK, le poly(éther cétone cétone) PEKK, le Poly(éther cétone éther cétone cétone) PEKEKK ou les PA de haute température de transition vitreuse Tg). Avantageusement, ledit polymère thermoplastique est un polymère dont la température de transition vitreuse est telle que $Tg \geq 80°C$ ou un polymère semi-cristallin dont la température de fusion $Tf \geq 150°C$.

Avantageusement, ledit polymère thermoplastique est :

un polyamide aliphatique choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), ou un mélange de ceux-ci ou un copolyamide de ceux-ci,

un polyamide semi-aromatique, éventuellement modifié par des unités urées, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;

X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18, notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, PA 11/BACT/6T un PA 11/MPMDT/10T et un PA 11/MXDT/10T, et les copolymères blocs, notamment polyamide/polyéther (PEBA).

T correspond à l'acide téréphtalique, MXD correspond à la m-xylylène diamine, MPMD correspond à la méthylpentaméthylène diamine et BAC correspond au bis(aminométhyl)cyclohexane.

**Matériau fibreux :**

Concernant les fibres de constitution dudit matériau fibreux, ce sont notamment des fibres d'origine minérale, organique ou végétale.

Comme déjà dit plus haut, ledit matériau fibreux peut donc comprendre jusqu'à 0,1% en poids d'un matériau de nature organique (type résine thermodurcissable ou thermoplastique) dénommé ensimage.

Avantageusement, ladite mèche (81a) ou lesdites mèches est(sont) non ensimées. Cela signifie que ladite mèche (81a) ou lesdites mèches est(sont) soit substantiellement dépourvue(s) d'ensimage parce que le matériau fibreux a été au préalable dé-ensimé ou soit dépourvue(s) d'ensimage parce que le matériau fibreux d'origine est non ensimé.

Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice de pré-imprégnation lorsque ce dernier est amorphe, ou supérieure à la Tf du polymère ou mélange de polymère thermoplastique de constitution de la matrice de pré-imprégnation lorsque ce dernier est semi-cristallin. Ainsi, il n'y a aucun risque de fusion pour les fibres organiques de constitution du matériau fibreux lors de l'imprégnation par la matrice thermoplastique du composite final. Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être pré-imprégnées de poudre polymère thermoplastique et former le matériau fibreux pré-imprégné.

Les mèches de fibres organiques peuvent avoir plusieurs grammages. Elles peuvent en outre présenter plusieurs géométries. Les fibres peuvent se présenter sous forme de fibres courtes, qui composent alors les feutres ou les non tissés pouvant se présenter sous la forme de bandes, nappes, ou morceaux, ou sous forme de fibres continues, qui composent les tissus 2D, les tresses ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Les matériaux imprégnés, sont aussi appelés « prêts à l'emploi », et sont obtenus à partir du matériau fibreux pré-imprégné, après fusion de la poudre ou du mélange de poudre. Dans ce type de matériaux imprégnés, le polymère ou mélange de polymères thermoplastiques d'imprégnation est réparti de manière à obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux imprégné et le fragilisent mécaniquement. Une réduction de la porosité améliore donc la tenue mécanique et l'homogénéité du matériau composite formé à partir de ces matériaux fibreux pré-imprégnés.

Ainsi, dans le cas de matériaux imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégnée par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum.

Avantageusement, le taux de porosité dudit matériau fibreux imprégné obtenu après fusion de la poudre présente dans la mèche pré-imprégnée et imprégnation à cœur des fibres, est compris de 0% et 30%, notamment de 1% à 10%, en particulier de 1% à 5%.

Le taux de porosité correspond au taux de porosité fermée et peut être déterminée soit par microscopie électronique, soit comme étant l'écart relatif entre la densité théorique et la densité expérimentale dudit matériau fibreux pré-imprégné tel que décrit dans la partie exemples de la présente invention.

### Etape de pré-imprégnation :

Un exemple d'unité de mise en œuvre du procédé de fabrication est décrit dans la demande internationale WO 2015/121583 et est représenté figure 1, à l'exception de la cuve (autrement appelée cuve de pré-imprégnation qui dans le cas de l'invention comprend un lit fluidisé muni d'une pièce d'embarrage gorgée (figure 3) qui peut être un rouleau cylindrique gorgé (figure 4)).

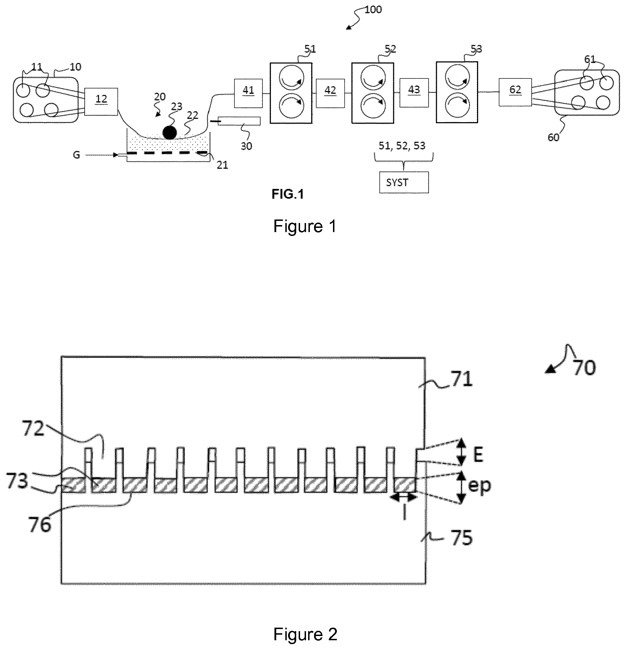

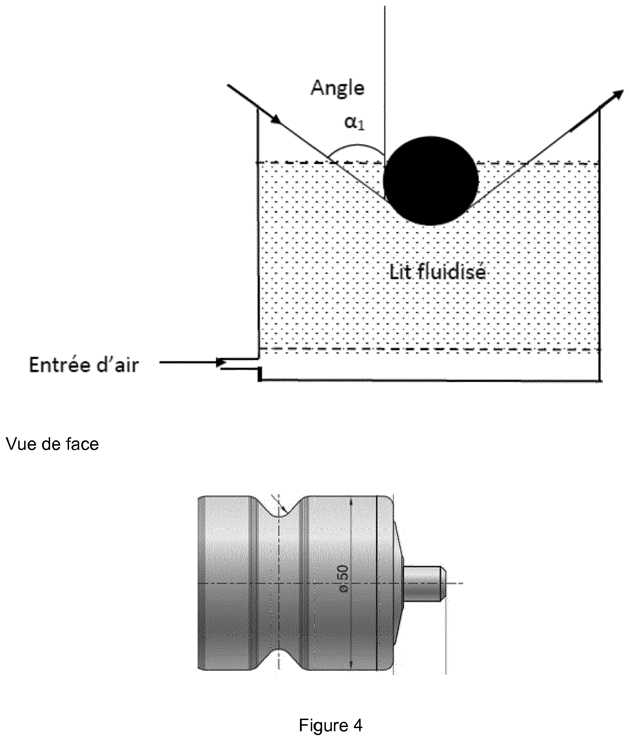

Sur les figures 1 à 9 dans lesquelles la pièce d'embarrage ou le rouleau sont perpendiculaires au lit fluidisé, la gorge n'est pas visible. Elle ne l'est qu'en vue de face (figures 2 et 4).

Tous les rouleaux cylindriques présentés dans les figures 1 à 9 sont gorgés.

La gorge peut être de n'importe quelle forme et présente une largeur inférieure à la largeur qu'aurait la mèche si le rouleau était lisse et cylindrique, d'un diamètre égal au diamètre en fond de gorge, dans les mêmes conditions de fluidisation de la poudre et de tension de la mèche.

Le rouleau cylindrique peut être fixe ou en rotation contrôlée, c'est-à-dire non libre. Plusieurs rouleaux peuvent être présents et s'ils sont en rotation contrôlée, ils peuvent être co-rotatif ou contra-rotatif.

L'étape de pré-imprégnation du matériau fibreux est réalisée par passage d'une ou plusieurs mèches dans un dispositif de pré-imprégnation en continu, comprenant une cuve (20), comprenant un lit fluidisé (22) de poudre polymère.

La poudre de polymère(s) ou polymère est mise en suspension dans un gaz G (de l'air par exemple) introduit dans la cuve et circulant dans la cuve à travers une trémie 21. La ou les mèches sont mises en circulation dans ce lit fluidisé 22.

La cuve peut avoir toute forme, notamment cylindrique ou parallélépipédique, en particulier un parallélépipède rectangle ou un cube, avantageusement un parallélépipède rectangle.

La cuve peut être une cuve ouverte ou fermée. Avantageusement, elle est ouverte. Dans le cas où la cuve est fermée, elle est alors équipée d'un système d'étanchéité pour que la poudre polymère ne puisse pas sortir de ladite cuve.

Cette étape de pré-imprégnation est donc effectuée par voie sèche, c'est à dire que la matrice polymère thermoplastique est sous forme de poudre, notamment en suspension dans un gaz, en particulier de l'air, mais ne peut pas être en dispersion dans un solvant ou dans l'eau.

Chaque mèche à imprégner est déroulée d'un dispositif (10) à dévidoirs (11) sous la traction engendrée par des cylindres (non représentés). De préférence, le dispositif (10) comprend une pluralité de dévidoirs (11), chaque dévidoir permettant de dérouler une mèche à imprégner. Ainsi, il est possible de pré-imprégner plusieurs mèches de fibres simultanément. Chaque dévidoir (11) est pourvu d'un frein (non représenté) de manière à appliquer une tension sur chaque mèche de fibres. Dans ce cas, un module d'alignement (12) permet de disposer les mèches de fibres parallèlement les unes par rapport aux autres. De cette manière les mèches de fibres ne peuvent pas être en contact les unes avec les autres, ce qui permet d'éviter une dégradation mécanique des fibres par frottement entre elles.

La mèche de fibres ou les mèches de fibres parallèles passent alors dans une cuve (20), comprenant en particulier un lit fluidisé (22), munie d'une pièce d'embarrage gorgée qui est un rouleau cylindrique comportant plusieurs gorges (une par mèche) (23) dans le cas de la figure 1. La mèche de fibres ou les mèches de fibres parallèles ressort(ent) ensuite de la cuve après imprégnation après contrôle du temps de séjour dans la poudre et par contrôle constant de la tension de ladite mèche (81a) ou desdites mèches lorsqu'elle(s) pénètre(nt) dans le lit fluidisé.

Avantageusement, la tension de ladite mèche (81a) ou desdites mèches lorsqu'elle(s) pénètre(nt) dans le lit fluidisé est jusqu'à 1000g.

La tension de ladite mèche peut être mesurée soit de manière manuelle et intermittente en plusieurs points de la ligne grâce à un tensiomètre, soit grâce à des jauges de contraintes intégrées dans des éléments en contact avec les mèches. Avantageusement, la tension de ladite mèche (81a) ou desdites mèches lorsqu'elle(s) pénètre(nt) dans le lit fluidisé est comprise de 100 à 1000g, en particulier de 200 à 1000g, plus particulièrement de 300 à 850g.

Dans un mode de réalisation, ladite étape de pré-imprégnation est effectuée avec épanouissement simultané de ladite mèche (81a) ou desdites mèches entre l'entrée et la sortie dudit lit fluidisé (22).

Avantageusement, la largeur minimum de ladite mèche (81a) ou desdites mèches est supérieure à la largeur de la gorge de ladite pièce d'embarrage gorgée.

La tension appliquée à la mèche (ou aux mèches) de fibres doit être suffisante pour que la largeur minimum de la mèche libre soit supérieure à la largeur de la gorge, de façon à toujours bien remplir la totalité de la gorge avec la mèche de fibres. On entend par largeur minimum de la mèche la largeur qu'aurait la mèche dans les mêmes conditions de tension et de fluidisation de la poudre, sur un rouleau lisse de même diamètre que celui de fond de gorges. Cette largeur peut avantageusement être mesurée par différentes méthodes, même sur des rouleaux complètement immergés dans la poudre, comme avec des capteurs de pression, des capteurs de position (type LVDT) sur un rouleau lisse pour ensuite être transposée à l'utilisation d'un rouleau gorgé dont la largeur de gorge sera inférieure à la valeur minimale relevée à l'aide des capteurs.

Le choix du couple tension et largeur de gorge sera optimum lorsque la tension sera minimum et que l'imprégnation de la mèche sera bonne, au-delà cependant de 100g, préférentiellement au-delà de 200g, en sortie de cantre, de façon à éviter la formation et/ou le passage de twists.

Les Inventeurs ont trouvé de manière inattendue que lorsqu'un matériau fibreux non ensimé est utilisé pour l'étape de pré-imprégnation en lit fluidisé, le contrôle du temps de séjour dans la poudre n'était plus suffisant pour imprégner le matériau fibreux par la matrice polymère thermoplastique, en particulier à cœur et de manière homogène avec un taux de poudre (résine) bien contrôlé et que l'étape de pré-imprégnation nécessitait la présence d'un ou plusieurs embarrages gorgé, en particulier un ou plusieurs rouleau(x) gorgés dans le lit fluidisé avec contrôle simultané de la tension dudit matériau fibreux à l'entrée du lit fluidisé.

Ils ont également trouvé que le contrôle simultané de la tension dudit matériau fibreux à l'entrée du lit fluidisé de manière à ce que la largeur minimum de ladite mèche soit toujours supérieure à la largeur de la gorge dudit embarrage, en particulier dudit rouleau cylindrique gorgé permettait l'imprégnation dudit matériau fibreux par la matrice polymère thermoplastique, en particulier à cœur et de manière homogène avec un taux de poudre (résine) bien contrôlé.

Par pièce d'embarrage gorgée, il faut entendre tout système sur lequel la mèche à la possibilité de défiler dans la cuve et qui présente une gorge. La pièce d'embarrage peut avoir n'importe quelle forme à partir du moment où elle est gorgée et que la mèche peut défiler dans la gorge.

Avantageusement, la taille des gorges est juste inférieure à la largeur minimum de la mèche de fibres.

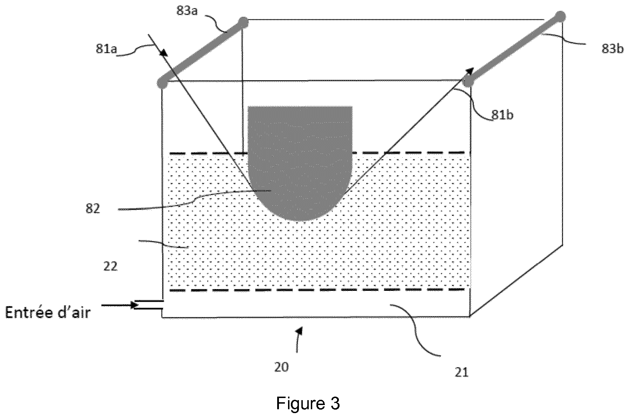

Un exemple de pièce d'embarrage, sans restreindre l'invention à celui-ci, est détaillé dans la figure 3.

Cette imprégnation est réalisée afin de permettre à la poudre polymère de pénétrer au cœur de la mèche de fibre et d'adhérer aux fibres suffisamment pour supporter le transport de la mèche poudrée hors de la cuve. La ou les mèches pré-imprégnées par la poudre, est (sont) dirigée(s) ensuite vers un dispositif de calandrage chauffant, avec possibilité de préchauffage avant calandrage et éventuel chauffage post-calandrage.

De manière facultative, cette étape de pré-imprégnation peut être complétée par une étape de recouvrement de la mèche ou des mèches pré-imprégnées, juste en sortie de la cuve (20) de pré-imprégnation par la poudre en lit fluidisé (22), et juste avant l'étape de mise en forme par calandrage. Pour cela, le sas de sortie de la cuve (20) (lit fluidisé 22) peut être connecté à un dispositif de recouvrement (30) pouvant comporter une tête d'équerre de recouvrement, comme cela est également décrit dans le brevet EP0406067. Le polymère de recouvrement peut être identique ou différent de la poudre polymère en lit fluidisé. De préférence, il est de même nature.

Un tel recouvrement permet non seulement de compléter l'étape de pré-imprégnation des fibres pour obtenir un taux volumique final de polymère dans la gamme souhaitée et éviter la présence à la surface de la mèche pré-imprégnée, d'un taux de fibres localement trop important, qui nuirait au soudage des tapes lors de la fabrication de la pièce composite, notamment pour l'obtention de matériaux fibreux dits « prêts à l'emploi » de bonne qualité, mais également pour améliorer les performances du matériau composite obtenu.

Le procédé de l'invention comme indiqué ci-dessus est avantageusement effectué par voie sèche à l'exclusion d'un procédé électrostatique en charge volontaire. L'expression « en charge volontaire » signifie qu'une différence de potentiel est appliquée entre le matériau fibreux et la poudre. La charge est notamment contrôlée et amplifiée. Les grains de poudres imprègnent alors le matériau fibreux par attraction de la poudre chargée à l'opposé de la fibre. On peut charger électriquement, négativement ou positivement, la poudre par différents moyens (différence de potentiel entre deux électrodes métalliques, frottement mécanique sur parties métalliques etc...) et charger la fibre inversement (positivement ou négativement). Le procédé de l'invention n'exclut pas la présence de charges électrostatiques qui pourraient apparaitre par frottement du matériau fibreux sur les éléments de l'unité de mise en œuvre avant ou au niveau de la cuve mais qui sont en tout état de cause des charges involontaires.

Avantageusement, le taux de fibres dans ledit matériau fibreux imprégné est compris de 45 à 65 % en volume, de préférence de 50 à 60% en volume, en particulier de 54 à 60% en volume.

En dessous de 45% de fibres, le renfort n'a pas d'intérêt pour ce qui concerne les propriétés mécaniques.

Au-dessus de 65%, les limites du procédé sont atteintes et les propriétés mécaniques sont reperdues.

Avantageusement, le taux de fibres dans ledit matériau fibreux imprégné est compris de 50 à 60%, en particulier de 54 à 60% % en volume.

Avantageusement, le temps de séjour dans la poudre est compris de 0,01s à 10s, préférentiellement de 0,1s à 5s, et en particulier de 0,1s à 3s.

Le temps de séjour du matériau fibreux dans la poudre est essentiel pour contrôler le taux de résine, dudit matériau fibreux.

En deçà de 0,1s, le taux de résine sera trop faible pour ensuite, lors de l'étape de fusion de la poudre, pouvoir imprégner à cœur les fibres.

Au-delà de 10s, le taux de matrice polymère imprégnant le matériau fibreux est trop important et les propriétés mécaniques du matériau fibreux imprégné seront mauvaises.

Avantageusement, la cuve utilisée dans le procédé de l'invention comprend un lit fluidisé et ladite étape de pré-imprégnation est effectuée avec épanouissement simultané de ladite mèche ou desdites mèches entre l'entrée et la sortie de ladite cuve.

L'expression « entrée de la dite cuve» correspond à la tangente verticale du bord de la cuve qui comprend le lit fluidisé.

L'expression « sortie de ladite cuve» correspond à la tangente verticale de l'autre bord de la cuve qui comprend le lit fluidisé.

En fonction de la géométrie de la cuve, la distance entre l'entrée et la sortie de celle-ci correspond donc au diamètre dans le cas du cylindre, au côté dans le cas d'un cube ou à la largeur ou la longueur dans le cas d'un parallélépipède rectangle. L'épanouissement consiste à singulariser au maximum chaque filament constitutif de ladite mèche des autres filaments qui l'entourent dans son plus proche espace. Il correspond à l'étalement transverse de la mèche.

En d'autres termes, l'étalement transverse ou la largeur de la mèche augmente entre l'entrée du lit fluidisé (ou de la cuve comprenant le lit fluidisé) et la sortie du lit fluidisé (ou de la cuve comprenant le lit fluidisé) et permet ainsi une pré-imprégnation homogène du matériau fibreux.

Le lit fluidisé peut être ouvert ou fermé, en particulier il est ouvert. Avantageusement, le lit fluidisé comprend au moins une pièce d'embarrage, ladite mèche ou lesdites mèches étant en contact avec une partie ou la totalité de la surface de ladite au moins une pièce d'embarrage.

La figure 3 détaille une cuve (20) comprenant un lit fluidisé (22) avec une pièce d'embarrage, réglable en hauteur (82).

La mèche (81a) correspond à la mèche avant imprégnation qui est en contact avec une partie ou la totalité de la surface de ladite au moins une pièce d'embarrage et défile donc partiellement ou totalement à la surface de la pièce d'embarrage (82), ledit système (82) étant immergé dans le lit fluidisé où l'imprégnation s'effectue. Ladite mèche ressort ensuite de la cuve (81b) après contrôle du temps de séjour dans la poudre.

La dite mèche (81a) peut être en contact ou non avec le bord de la cuve (83a) qui peut être un rouleau rotatif ou fixe ou un bord parallélépipédique. Avantageusement, la dite mèche (81a) est en contact ou non avec le bord de la cuve (83a).

Avantageusement, le bord de la cuve (83b) est un rouleau, notamment cylindrique et rotatif.

La dite mèche (81b) peut être en contact ou non avec le bord de la cuve (83b) qui peut être un rouleau, notamment cylindrique et rotatif ou fixe, ou un bord parallélépipédique.

Avantageusement, la dite mèche (81b) est en contact avec le bord de la cuve (83b). Avantageusement, le bord de la cuve (83b) est un rouleau, notamment cylindrique et rotatif.

Avantageusement, la dite mèche (81a) est en contact avec le bord de la cuve (83a) et le bord de la cuve (83b) est un rouleau, notamment cylindrique et rotatif et la dite mèche (81b) est en contact avec le bord de la cuve (83b), et le bord de la cuve (83b) est un rouleau, notamment cylindrique et rotatif.

Avantageusement, ladite pièce d'embarrage est perpendiculaire à la direction de ladite mèche ou desdites mèches.

Avantageusement, ledit épanouissement de ladite mèche ou desdites mèches est effectué au moins au niveau de ladite au moins une pièce d'embarrage. L'épanouissement de la mèche s'effectue donc principalement au niveau de la pièce d'embarrage mais peut également s'effectuer au niveau du ou des bords de la cuve s'il y a contact entre la mèche et ledit bord.

Dans un autre mode de réalisation, ladite au moins une pièce d'embarrage est un rouleau cylindrique gorgé de forme convexe, concave ou cylindrique.

La forme convexe est favorable à l'épanouissement alors que la forme concave est défavorable à l'épanouissement bien qu'il s'effectue néanmoins.

L'expression « rouleau cylindrique gorgé » signifie que la mèche qui défile s'appuie partiellement ou totalement sur la surface dudit rouleau cylindrique gorgé, ce qui induit l'épanouissement de la dite mèche.

Avantageusement, ledit au moins un rouleau cylindrique gorgé est de forme cylindrique et le pourcentage d'épanouissement de ladite mèche ou desdites mèches entre l'entrée et la sortie dudit lit fluidisé est compris de 1% à 400%, préférentiellement entre 30% et 400% préférentiellement entre 30% et 150%, préférentiellement entre 50% et 150%. Le pourcentage d'épanouissement est défini comme (Lf-Li)/Li*100, ou Li et Lf sont les largeurs avant et après épanouissement. L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres ou filaments dans la mèche, de leur diamètre moyen et de leur cohésion.

Le diamètre dudit au moins un rouleau cylindrique gorgé est compris de 3 mm à 500 mm, préférentiellement de 10 mm à 100 mm, en particulier de 20 mm à 60 mm. Au-dessous de 3 mm, la déformation de la fibre induite par le rouleau cylindrique gorgé est trop importante.

Avantageusement, le rouleau cylindrique gorgé est cylindrique et non cannelé et en particulier est métallique.

Lorsque la pièce d'embarrage est au moins un rouleau cylindrique gorgé, selon une première variante, un seul rouleau cylindrique gorgé est présent dans le lit fluidisé et ladite imprégnation est effectuée au niveau de l'angle $\alpha_1$ formé par ladite mèche ou lesdites mèches entre l'entrée dudit rouleau cylindrique gorgé et la tangente verticale audit rouleau cylindrique gorgé.

L'angle $\alpha_1$ formé par ladite mèche ou lesdites mèches entre l'entrée dudit rouleau cylindrique gorgé et la tangente verticale audit rouleau cylindrique gorgé permet la formation d'une zone dans laquelle la poudre va se concentrer conduisant ainsi à un « effet de coin » qui avec l'épanouissement simultané de la mèche par ledit rouleau cylindrique gorgé permet une pré-imprégnation sur une largeur plus importante de mèche et donc une pré-imprégnation améliorée comparée aux techniques de l'art antérieur améliorée. Le couplage avec le temps de séjour contrôlé permet alors une pré-imprégnation homogène.

Avantageusement, l'angle $\alpha_1$ est compris de 0 à 89°, préférentiellement 5° à 85°, préférentiellement de 5° à 45°, préférentiellement de 5° à 30°.

Néanmoins, un angle $\alpha_1$ compris de 0 à 5° est susceptible d'engendrer des risques de sollicitation mécanique, ce qui conduira à la casse des fibres et un angle $\alpha_1$ compris de 85° à 89° ne crée pas suffisamment d'effort mécanique pour créer « l'effet de coin ».

Une valeur de l'angle $\alpha_1$ égale à 0° correspond donc à une fibre verticale. Il est bien évident que la hauteur du rouleau cylindrique gorgé cylindrique est réglable permettant ainsi de pouvoir positionner la fibre verticalement.

On ne sortirait pas du cadre de l'invention si la paroi de la cuve était percée de manière à pouvoir permettre la sortie de la mèche.

Avantageusement, le bord de la cuve (83a) est équipé d'un rouleau, notamment cylindrique et rotatif sur lequel défile ladite mèche ou les dites mèches conduisant ainsi à un épanouissement préalable.

Avantageusement, un ou plusieurs embarrages sont présents en aval de la cuve comprenant le lit fluidisé au niveau duquel ou desquels l'épanouissement est initié. Avantageusement, l'épanouissement est initié au niveau du ou desdits embarrages ci-dessus définis et se poursuit au niveau du bord de la cuve (83a). L'épanouissement est alors maximum après passage au niveau du ou des rouleaux cylindriques gorgés.

La figure 4 décrit un mode de réalisation, sans être limité à celui-ci, à un seul rouleau cylindrique gorgé, avec une cuve (20) comprenant un lit fluidisé (22) dans lequel un seul rouleau cylindrique gorgé cylindrique est présent et montrant l'angle $\alpha_1$.

Les flèches au niveau de la fibre indiquent le sens de défilement de la fibre. Avantageusement, le niveau de ladite poudre dans ledit lit fluidisé est au moins situé à la mi-hauteur dudit rouleau cylindrique gorgé.

Il est bien évident que « l'effet de coin » provoqué par l'angle $\alpha_1$ favorise la pré-imprégnation sur une face mais l'épanouissement de ladite mèche obtenu grâce au rouleau cylindrique gorgé permet aussi d'avoir une pré-imprégnation sur l'autre face de ladite mèche. Autrement dit, ladite pré-imprégnation est favorisée sur une face de ladite mèche ou desdites mèches au niveau de l'angle $\alpha_1$ formé par ladite mèche ou lesdites mèches entre l'entrée dudit au moins un rouleau cylindrique gorgé $R_1$ et la tangente verticale au rouleau cylindrique gorgé $R_1$ mais l'épanouissement permet aussi de pré-imprégner l'autre face.

L'angle $\alpha_1$ est tel que défini ci-dessus.

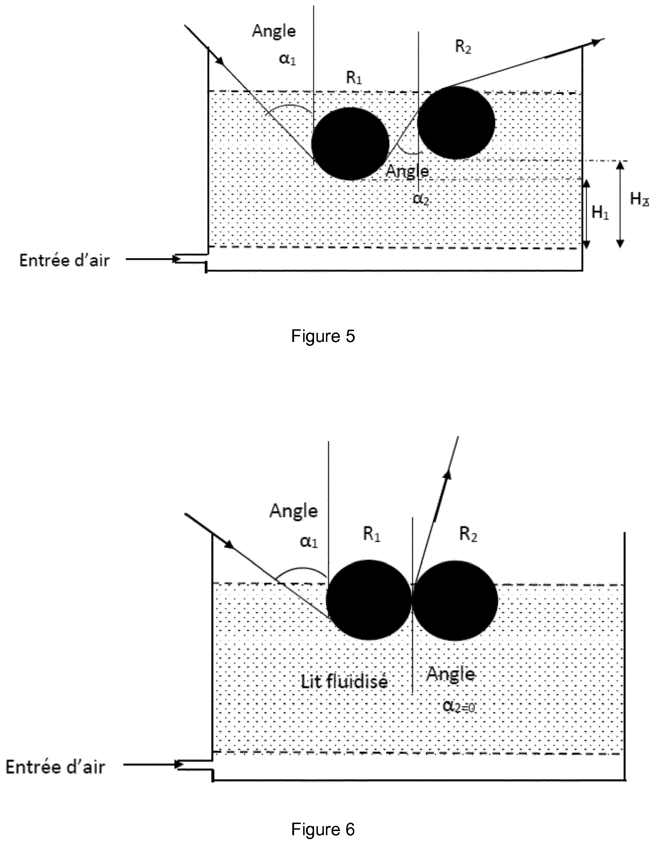

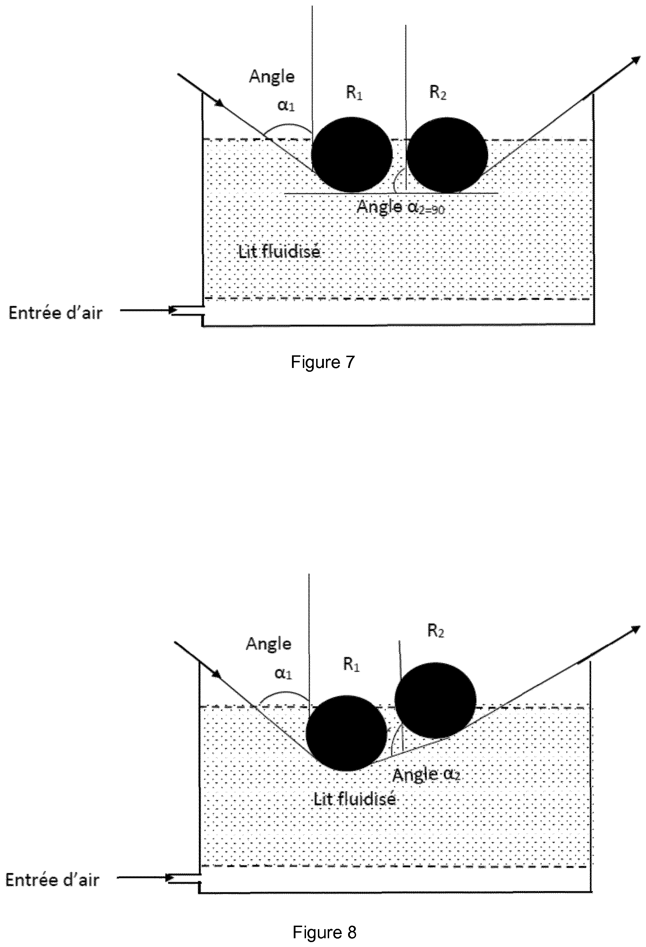

Selon une deuxième variante, lorsque la pièce d'embarrage est au moins un rouleau cylindrique gorgé, alors deux rouleaux cylindriques gorgés $R_1$ et $R_2$ sont dans ledit lit fluidisé et ladite pré-imprégnation est effectuée au niveau de l'angle $\alpha_1$ formé par ladite mèche ou lesdites mèches entre l'entrée dudit rouleau cylindrique gorgé $R_1$ et la tangente verticale audit rouleau cylindrique gorgé $R_1$ et/ou au niveau de l'angle $\alpha_2$ formé par ladite mèche ou lesdites mèches entre l'entrée dudit rouleau cylindrique gorgé $R_2$ et la tangente verticale audit rouleau cylindrique gorgé $R_2$, ledit rouleau cylindrique gorgé $R_1$ précédant ledit rouleau cylindrique gorgé $R_2$ et ladite mèche ou lesdites mèche pouvant passer au-dessus (figure 5 et 6) ou en dessous (figure 7 et 8) du rouleau $R_2$.

Avantageusement, les deux rouleaux cylindriques gorgés sont de forme identique ou différente et choisie parmi une forme convexe, concave ou cylindrique. Avantageusement, les deux rouleaux cylindriques gorgés sont identiques et cylindriques et en particulier métalliques.

Le diamètre des deux rouleaux cylindriques gorgés peut aussi être identique ou différent et est tel que défini ci-dessus.

Avantageusement, le diamètre des deux rouleaux cylindriques gorgés est identique. Les deux rouleaux cylindriques gorgés $R_1$ et $R_2$ peuvent être au même niveau l'un par rapport à l'autre et par rapport au fond de la cuve (figures 6 et 7) ou décalés l'un par rapport à l'autre et par rapport au fond de la cuve, la hauteur du rouleau cylindrique gorgé $R_1$ étant supérieure ou inférieure à celle du rouleau cylindrique gorgé $R_2$ par rapport au fond de la cuve (figures 5 et 8).

Avantageusement, lorsque les deux rouleaux sont à des hauteurs différentes et que la mèche passe au-dessus du rouleau $R_2$, alors $\alpha_2$ est compris de 0 à 90°.

Avantageusement, ladite pré-imprégnation s'effectue donc au niveau de l'angle $\alpha_1$ formé par ladite mèche ou lesdites mèches entre l'entrée dudit rouleau cylindrique gorgé $R_1$ et la tangente verticale audit rouleau cylindrique gorgé sur une face de ladite mèche et au niveau de l'angle $\alpha_2$ formé par ladite mèche ou lesdites mèches entre l'entrée dudit rouleau cylindrique gorgé $R_2$ et la tangente verticale audit rouleau cylindrique gorgé $R_2$ sur la face opposée de la dite mèche ce qui s'obtient en passant au-dessus du rouleau $R_2$.

Avantageusement, ladite mèche dans ce mode de réalisation est sujette à un épanouissement au niveau de chaque angle $\alpha_1$ et $\alpha_2$.

La figure 6 décrit un mode de réalisation, sans être limité à celui-ci, à deux rouleaux cylindriques gorgés $R_1$ et $R_2$, $R_1$ précédant $R_2$, avec une cuve (20) comprenant un lit fluidisé (22) dans lequel les deux rouleaux cylindriques gorgés cylindriques, au même niveau et côte à côte, sont présents et montrant le cas où ladite ou lesdites mèches ressortent entre lesdits rouleaux cylindriques gorgés $R_1$ et $R_2$.

Dans ce cas, l'angle $\alpha_2$ est égal à 0 et ladite ou lesdites mèches passent par-dessus le rouleau $R_2$.

Les flèches au niveau de la fibre indiquent le sens de défilement de la fibre.

De manière alternative, ladite mèche ou lesdites mèches défile(nt) en entrée entre lesdits rouleaux cylindriques gorgés $R_1$ et $R_2$ et ressort(ent) après avoir été en contact avec une partie ou la totalité de la surface dudit rouleau cylindrique gorgé $R_2$. Avantageusement, ladite mèche ou lesdites mèches est(sont) en contact en entrée avec une partie ou la totalité de la surface dudit rouleau cylindrique gorgé $R_1$ et ressort(ent) à l'extérieur du rouleau cylindrique gorgé $R_2$ après avoir été en contact avec une partie ou la totalité de la surface dudit rouleau cylindrique gorgé $R_2$, sous le rouleau $R_2$, l'angle $\alpha_2$ étant formé par ladite mèche ou lesdites mèches entre l'entrée dudit rouleau cylindrique gorgé $R_2$ et la tangente verticale audit rouleau cylindrique gorgé R2. Dans ce cas, l'angle $\alpha_2$ = 90°.

Ladite pré-imprégnation s'effectue donc au niveau de l'angle $\alpha_1$ formé par ladite mèche ou lesdites mèches entre l'entrée dudit rouleau cylindrique gorgé $R_1$ et la tangente verticale audit rouleau cylindrique gorgé sur une face de ladite mèche et au niveau de l'angle $\alpha_2$ formé par ladite mèche ou lesdites mèches entre l'entrée dudit rouleau cylindrique gorgé $R_2$ et la tangente verticale audit rouleau cylindrique gorgé $R_2$ sur la même face de la dite mèche mais l'épanouissement permet aussi de pré-imprégner l'autre face.

Avantageusement, ladite mèche dans ce mode de réalisation est sujette à un épanouissement au niveau de chaque angle $\alpha_1$ et $\alpha_2$.

La figure 7 présente un exemple de mode de réalisation avec deux rouleaux cylindriques gorgés $R_1$ et $R_2$ au même niveau l'un par rapport à l'autre.

Selon un autre mode de réalisation de la deuxième variante, lorsque deux rouleaux cylindriques gorgés sont présents alors la distance entre les deux rouleaux cylindriques gorgés $R_1$ et $R_2$ est comprise de 0,15 mm à la longueur équivalente à la dimension maximale de la cuve, préférentiellement comprise de 10mm à 50mm et la différence de hauteur entre les deux rouleaux cylindriques gorgés $R_1$ et $R_2$ est comprise de 0 à la hauteur correspondant à la hauteur maximale de la cuve soustraite des diamètres des deux rouleaux cylindriques gorgés, préférentiellement comprise de 0,15mm à la hauteur correspondant à la hauteur maximale de la cuve soustraite des diamètres des deux rouleaux cylindriques gorgés, plus préférentiellement à une différence de hauteur comprise entre 10mm et 300mm, $R_2$ étant le rouleau cylindrique gorgé supérieur.

Avantageusement, lorsque deux rouleaux cylindriques gorgés sont présents et au même niveau l'un par rapport à l'autre, le niveau de ladite poudre dans ledit lit fluidisé est au moins situé à la mi-hauteur desdits deux rouleaux cylindriques gorgés.

La figure 8 décrit un mode de réalisation, sans être limité à celui-ci, à deux rouleaux cylindriques gorgés $R_1$ et $R_2$, $R_1$ précédant $R_2$, avec une cuve (20) comprenant un lit fluidisé (22) dans lequel deux rouleaux cylindriques gorgés cylindriques à des niveaux différents sont présents et montrant l'angle $\alpha_1$ et $\alpha_2$.

Le diamètre des rouleaux cylindriques gorgés $R_1$ et $R_2$ est présenté comme identique sur les figures 5, 6, 7 et 8 mais le diamètre de chaque rouleau cylindrique gorgé cylindrique peut être différent, le diamètre du rouleau cylindrique gorgé $R_1$ pouvant être supérieur ou inférieur à celui du rouleau cylindrique gorgé $R_2$ dans la gamme telle que définie ci-dessus.

Avantageusement, le diamètre des deux rouleaux cylindriques gorgés est identique. On ne sortirait pas du cadre de l'invention si le rouleau cylindrique gorgé $R_1$ était supérieur au rouleau cylindrique gorgé $R_2$.

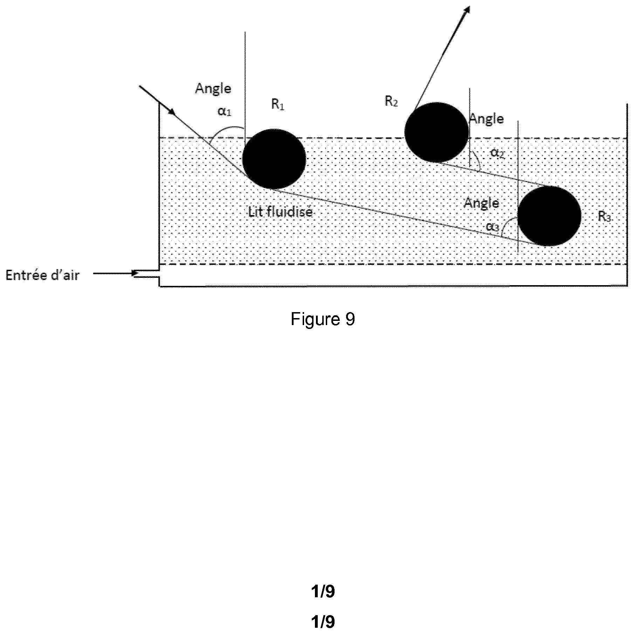

Selon une troisième variante, lorsque deux rouleaux cylindriques gorgés sont présents et à des niveaux différents, alors au moins un troisième rouleau cylindrique gorgé $R_3$ est de plus présent et situé entre les rouleaux cylindriques gorgés $R_1$ et $R_2$ dans le sens de la hauteur (figure 9).

Avantageusement ladite mèche ou lesdites mèches est(sont) en contact en entrée avec une partie ou la totalité de la surface dudit rouleau cylindrique gorgé $R_1$ puis avec une partie ou la totalité de la surface dudit rouleau cylindrique gorgé $R_3$ et ressort(ent) après avoir été en contact avec une partie ou la totalité de la surface dudit rouleau cylindrique gorgé $R_2$.

Avantageusement, ladite pré-imprégnation est effectuée sur une face de ladite mèche ou desdites mèches au niveau de l'angle $\alpha_1$ formé par ladite mèche ou lesdites mèches entre l'entrée dudit au moins un rouleau cylindrique gorgé $R_1$ et la tangente verticale au rouleau cylindrique gorgé $R_1$ ainsi qu'au niveau de l'angle $\alpha_3$ formé par ladite mèche ou lesdites mèches et la tangente verticale au rouleau cylindrique gorgé $R_3$ et sur l'autre face qu'au niveau de l'angle $\alpha_2$ formé par ladite mèche ou lesdites mèches et la tangente verticale au rouleau cylindrique gorgé $R_2$.

Avantageusement, lorsque deux rouleaux cylindriques gorgés sont présents à des niveaux différents et qu'au moins un troisième rouleau cylindrique gorgé $R_3$ est de plus présent, alors l'angle $\alpha_2$ formé par ladite mèche ou lesdites mèches entre l'entrée dudit au moins un rouleau cylindrique gorgé $R_2$ et la tangente verticale audit rouleau cylindrique gorgé $R_2$, est compris de 180° à 45°, en particulier de 120° à 60°. Avantageusement, l'angle $\alpha_3$ est compris de 0° à 180°, avantageusement de 45° à 135°.

La figure 9 décrit un mode de réalisation, sans être limité à celui-ci, avec une cuve (20) comprenant un lit fluidisé (22) à deux rouleaux cylindriques gorgés $R_1$ et $R_2$, $R_1$ précédant $R_2$, et un troisième rouleau cylindrique gorgé $R_3$ et montrant les angles $\alpha_1$, $\alpha_2$ et $\alpha_3$.

Le diamètre des rouleaux cylindriques gorgés $R_1$, $R_2$ et $R_3$ est présenté comme identique sur la figure 9 mais le diamètre de chaque rouleau cylindrique gorgé cylindrique peut être différent, ou deux rouleaux cylindriques gorgés peuvent avoir le même diamètre et le troisième un diamètre différent supérieur ou inférieur, dans la gamme telle que définie ci-dessus.

Avantageusement, le diamètre des trois rouleaux cylindriques gorgés est identique. Avantageusement, dans cette troisième variante, un deuxième contrôle de l'épanouissement de ladite mèche ou desdites mèches est effectué au niveau du rouleau cylindrique gorgé $R_3$ et un troisième contrôle de l'épanouissement est effectué au niveau du rouleau cylindrique gorgé $R_3$.

Le temps de séjour dans cette troisième variante est tel que défini ci-dessus.

Avantageusement, dans cette troisième variante, le niveau de ladite poudre dans ledit lit fluidisé est au moins situé à la mi-hauteur dudit rouleau cylindrique gorgé $R_2$. On ne sortirait pas du cadre de l'invention si dans cette troisième variante, ladite mèche ou lesdites mèches est(sont) en contact en entrée avec une partie ou la totalité de la surface dudit rouleau cylindrique gorgé $R_1$ puis avec une partie ou la totalité de la surface dudit rouleau cylindrique gorgé $R_2$ et ressort(ent) après avoir été en contact avec une partie ou la totalité de la surface dudit rouleau cylindrique gorgé $R_3$.

Selon un mode de réalisation avantageux, la présente invention concerne un procédé tel que ci-dessus défini caractérisé en ce qu'une seule matrice polymère thermoplastique est utilisée et la poudre de polymère thermoplastique est fluidisable.

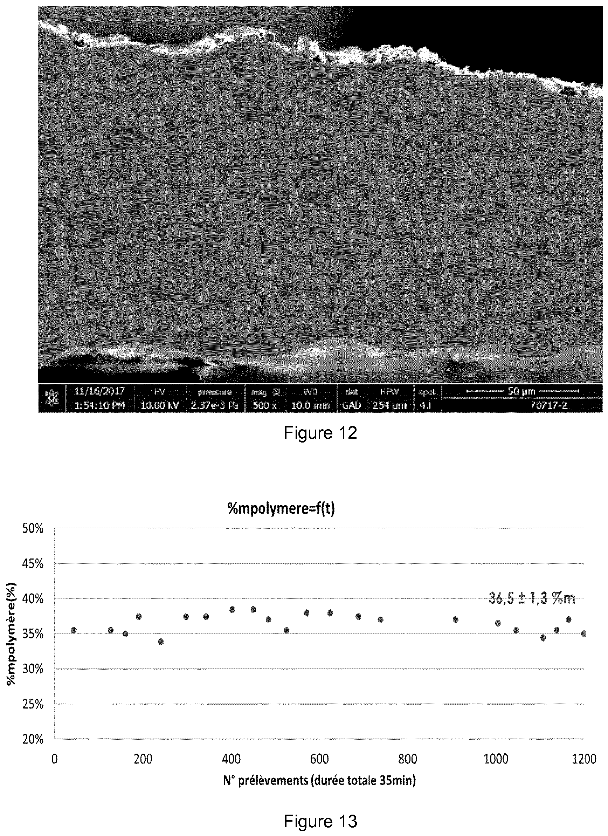

Le terme « fluidisable » signifie que le débit d'air appliqué au lit fluidisé est compris entre le débit minimum de fluidisation (Umf) et le débit minimum de bullage (Umf) tel que représenté figure 12.

En dessous du débit minimum de fluidisation, il n'y pas de fluidisation, les particules de poudre de polymère tombent dans le lit et ne sont plus en suspension et le procédé selon l'invention ne peut fonctionner.

Au-dessus du débit minimum de bullage, les particules de poudre s'envolent et la composition du lit fluidisé constante ne peut plus être maintenue constante. Avantageusement, le diamètre en volume D90 des particules est compris 50 à 500 $\mu$m, avantageusement de 120 à 300 $\mu$m.

Avantageusement, le diamètre en volume D10 des particules est compris de 5 à 200 $\mu$m, avantageusement de 35 à 100 $\mu$m.

Avantageusement, le diamètre en volume des particules de poudre est compris dans le ratio D90/D10, soit compris de 1,5 à 50, avantageusement de 2 à 10. Avantageusement, le diamètre moyen D50 en volume des particules de poudre de polymère thermoplastique est compris de 30 à 300 $\mu$m, notamment de 50 à 200 $\mu$m, plus particulièrement de 70 à 200$\mu$m.

Les diamètres en volume des particules (D10, D50 et D90) sont définis selon la norme ISO 9276 :2014.

Le « D50 » correspond au diamètre moyen en volume, c'est à dire la valeur de la taille de particule qui divise la population de particules examinée exactement en deux. Le « D90 » correspond à la valeur à 90% de la courbe cumulée de la distribution granulométrique en volume.

Le « D10 » correspond à la correspond à la taille de 10% du volume des particules. Selon un autre mode de réalisation du procédé selon l'invention, un cantre est présent avant la cuve comprenant un lit fluidisé pour le contrôle de la tension de ladite mèche ou desdites mèches à l'entrée de la cuve comprenant un lit fluidisé. Optionnellement, dans le procédé selon l'invention, un ou plusieurs embarrages sont présents après la cuve comprenant le lit fluidisé.

Optionnellement, des rouleaux gorgés en entrée et en sortie de la cuve contenant le lit fluidisé peuvent être utilisés.

**Etape de chauffage**

Dans un autre mode de réalisation, la présente invention concerne un procédé tel que défini ci-dessus caractérisé en ce qu'il comprend de plus au moins une étape de chauffage de la matrice thermoplastique permettant la fusion ou le maintien en fusion dudit polymère thermoplastique après pré-imprégnation,

ladite au moins une étape de chauffage étant effectuée au moyen d'au moins une pièce d'embarrage (E) conductrice ou non de la chaleur et d'au moins un système de chauffage, à l'exception d'une calandre chauffante,

ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) au niveau du système de chauffage.

On ne sortirait pas du cadre de l'invention si la pièce d'embarrage (E) était positionnée dans un four comportant un système de chauffage, par exemple par IR mais que ladite pièce d'embarrage n'était pas positionnée exactement sous les éléments chauffant par exemple par IR. On ne sortirait pas de l'invention si le four comportait un mode de chauffage par convection et un système de chauffage par IR.

On ne sortirait pas de l'invention non plus si ladite pièce d'embarrage (E) placée dans ce four ou dans l'environnement de ce four, était équipée d'un moyen de chauffage autonome comme une résistance permettant de chauffer ladite pièce d'embarrage (E), indépendamment par exemple du rayonnement des lampes IR et de la convection naturelle du four et que, compte tenu la vitesse de la ligne, le polymère présent dans les rubans ou les mèches soit encore à l'état fondu lorsqu'il arrive en contact avec ladite pièce d'embarrage. La hauteur entre le système de chauffage et les embarrages est comprise de 1 à 100 cm, préférentiellement de 2 à 30 cm, en particulier de 2 à 10 cm.

Une première étape de chauffage peut être immédiatement consécutive à l'étape de pré-imprégnation ou alors d'autres étapes peuvent intervenir entre l'étape de pré-imprégnation et l'étape de chauffage.

Néanmoins, la première étape de mise en œuvre par un système de chauffage muni d'au moins une pièce d'embarrage (E) ne correspond pas à une calandre chauffante, et est toujours effectuée avant l'étape de calandrage qui est nécessaire pour lisser et mettre en forme le ruban.

Avantageusement, ladite première étape de chauffage est immédiatement consécutive à l'étape de pré-imprégnation. L'expression « immédiatement consécutive » signifie qu'il n'y a pas d'étape intermédiaire entre l'étape de pré-imprégnation et ladite étape de chauffage.

Avantageusement, une seule étape de chauffage est effectuée, immédiatement consécutive à l'étape de pré-imprégnation.

Avantageusement, ledit au moins un système de chauffage est choisi parmi une lampe infrarouge, une lampe UV et un chauffage par convection si la pièce d'embarrage est conductrice de la chaleur.

Le matériau fibreux étant en contact avec le ou les embarrage(s) dans le système de chauffage, et l'embarrage étant conducteur, le système de chauffage s'effectue donc également par conduction.

Avantageusement, ledit au moins un système de chauffage est choisi parmi une lampe infrarouge.

Avantageusement, si la pièce d'embarrage n'est pas conductrice de la chaleur, ledit au moins un système de chauffage est choisi parmi un chauffage micro-onde, un chauffage laser, et un chauffage Hautes Fréquences (HF).

La pièce d'embarrage (E) non chauffante et non conductrice de la chaleur n'absorbe pas à la longueur d'onde du système de chauffage micro-onde, laser ou HF. Avantageusement, ledit au moins un système de chauffage est choisi parmi un chauffage micro-onde.

Avantageusement, ladite au moins une pièce d'embarrage (E) est un rouleau de compression R'i de forme convexe, concave ou cylindrique.

Il faut noter que les rouleaux de compression correspondant aux pièces d'embarrage (E) ou celles utilisées pour l'étape de pré-imprégnation peuvent être identiques ou différents que ce soit au niveau du matériau ou de la forme et ses caractéristiques (diamètre, longueur, largeur, hauteur... en fonction de la forme).

La forme convexe est favorable à l'épanouissement alors que la forme concave est défavorable à l'épanouissement bien qu'il s'effectue néanmoins.

La au moins une pièce d'embarrage (E) peut également être une alternance de forme convexe et concave. Dans ce cas, le défilement de la mèche sur un rouleau de compression de forme convexe provoque l'épanouissement de ladite mèche puis le défilement de la mèche sur un rouleau de compression de forme concave provoque la rétractation de la mèche et ainsi de suite permettant si besoin d'améliorer l'homogénéité de l'imprégnation, notamment à cœur.

L'expression « rouleau de compression » signifie que la mèche qui défile s'appuie partiellement ou totalement sur la surface dudit rouleau de compression, ce qui induit l'épanouissement de ladite mèche.

Les rouleaux peuvent être en rotation contrôlée ou fixes.

Ils sont gorgés et le fond de la gorge peut être lisse ou striée.

## Etape de mise en forme

Optionnellement une étape de mise en forme de la mèche ou desdites mèches parallèles dudit matériau fibreux imprégné est effectuée.

Un système de calandrage tel que décrit dans WO 2015/121583 peut être utilisé.

Avantageusement, elle est effectuée par calandrage au moyen d'au moins une calandre chauffante sous forme de ruban ou nappe unique unidirectionnel ou d'une pluralité de rubans ou nappe parallèles unidirectionnels avec, dans ce dernier cas, ladite calandre chauffante comportant une pluralité de gorges de calandrage, de préférence jusqu'à 200 gorges de calandrage, en conformité avec le nombre desdits rubans et avec une pression et/ou un écartement entre les rouleaux de ladite calandre régulés par un système asservi.

Cette étape est toujours effectuée après l'étape de chauffage s'il n'y en a qu'une ou bien entre la première étape de chauffage et la deuxième étape de chauffage lorsque les deux coexistent.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Selon un autre mode de réalisation, une presse à bande est présente entre le système de chauffage et la calandre.

Selon encore un autre mode de réalisation, une filière chauffante est présente entre le système de chauffage et la calandre.

Selon un autre mode de réalisation, une presse à bande est présente entre le système de chauffage et la calandre et une filière chauffante est présente entre la presse à bande et la calandre.

Avantageusement, l'étape de mise en forme de ladite mèche ou desdites mèches parallèles dudit matériau fibreux pré-imprégné, par calandrage au moyen d'au moins une calandre chauffante sous forme de ruban ou nappe unique unidirectionnel ou d'une pluralité de rubans ou nappes parallèles unidirectionnels avec, dans ce dernier cas, ladite calandre chauffante comportant une pluralité de gorges de calandrage, de préférence jusqu'à 300 gorges de calandrage, en conformité avec le nombre desdits rubans et avec une pression et/ou un écartement entre les rouleaux de ladite calandre régulés par un système asservi.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Dans un mode de réalisation, ladite (ou lesdites) calandre(s) chauffante(s) est (sont) couplée(s) à un dispositif de chauffage complémentaire, situé avant et/ou après ladite (chaque) calandre, en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme ou un gaz chaud.

Dans un autre mode de réalisation, ladite ou lesdites étape(s) de pré-imprégnation est(sont) complétée(s) par une étape de recouvrement de ladite mèche unique ou de ladite pluralité de mèches parallèles après pré-imprégnation par la poudre, ladite étape de recouvrement étant réalisée avant ladite étape de calandrage, par un polymère thermoplastique fondu, pouvant être identique ou différent dudit polymère sous forme de poudre en lit fluidisé, ledit polymère fondu étant de préférence de même nature que ledit polymère sous forme de poudre en lit fluidisé, de préférence avec ledit recouvrement s'effectuant par extrusion en tête d'équerre par rapport à ladite mèche unique ou à ladite pluralité de mèches parallèles.

Selon un autre aspect, la présente invention concerne un ruban ou une nappe unidirectionnel de matériau fibreux pré-imprégné, en particulier ruban ou nappe enroulé sur bobine, caractérisé en ce qu'il(elle) est obtenu(e) par un procédé tel que défini ci-dessus.

Avantageusement, le ruban ou la nappe a une largeur (l) et une épaisseur (ep) adaptées à une dépose par robot dans la fabrication de pièces en trois dimensions, et de préférence a une largeur (l) d'au moins 5 mm et pouvant aller jusqu'à 600mm, de préférence comprise entre 50 et 600 mm et de manière encore plus préférée comprise entre 50 et 300mm.

La dépose par robot peut être effectuée avec ou sans refente.

Avantageusement, le polymère thermoplastique du ruban ou de la nappe est un polyamide choisi parmi notamment un polyamide aliphatique tel que choisi PA 6, PA 11, PA 12, PA 66, PA 46, PA 610, PA 612, PA 1010, PA 1012, PA 11/1010 ou PA 12/1010 ou un polyamide semi-aromatique tel que un PA MXD6 et un PA MXD10 ou choisi parmi PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, PA BACT/6T/11 un PA 11/BACT/10T, un PA 11/MPMDT/10T et un PA 11/MXDT/10T, un PVDF, un PEEK, PEKK et un PEI ou un mélange de ceux-ci.

Selon un autre aspect, la présente invention concerne l'utilisation du procédé tel que défini ci-dessus, pour la fabrication de rubans ou de nappes calibrés adaptés à la fabrication de pièces composites en trois dimensions, par dépose automatique desdit(e)s rubans ou nappes au moyen d'un robot.

Selon un autre aspect, la présente invention concerne l'utilisation du ruban ou de la nappe de matériau fibreux imprégné, tel que défini(e) ci-dessus, dans la fabrication de pièces composites en trois dimensions.

Ledit ruban imprégné est donc obtenu à partir d'un ruban pré-imprégné après l'étape de chauffage décrite ci-dessus.

Avantageusement, ladite fabrication desdites pièces composites concerne les domaines des transports, en particulier automobile, du pétrole et du gaz, en particulier l'offshore, du stockage de gaz, aéronautique civile ou militaire, aérospatiale, nautique, ferroviaire ; des énergies renouvelables, en particulier éolienne, hydrolienne, les dispositifs de stockage d'énergie, les panneaux solaires ; des panneaux de protection thermique ;

des sports et loisirs, de la santé et du médical, de la sécurité et de l'électronique.

Selon encore un autre aspect, la présente invention concerne une pièce composite en trois dimensions, caractérisée en ce qu'elle résulte de l'utilisation d'au moins un ruban unidirectionnel de matériau fibreux imprégné tel que défini ci-dessus.

## Modes de réalisation avantageux du procédé de l'invention

Avantageusement, le matériau fibreux est choisi parmi la fibre de carbone et la fibre de verre.

Avantageusement, le polymère thermoplastique utilisé pour imprégner la fibre de carbone est choisi parmi un polyamide, notamment un polyamide aliphatique tel que PA 11, PA 12, PA 11/1010 ou PA 12/1010, ou un polyamide semi-aromatique, en particulier un PA MXD6 et un PA MXD10 ou choisi parmi PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, PA BACT/6T/11, un PA 11/BACT/10T, un PA 11/MPMDT/10T et un PA 11/MXDT/10T, un PVDF, un PEEK, PEKK et un PEI ou un mélange de ceux-ci. Avantageusement, le polymère thermoplastique utilisé pour imprégner la fibre de verre est choisi parmi un polyamide, notamment un polyamide aliphatique tel que PA 11, PA 12, PA 11/1010 ou PA 12/1010, ou un polyamide semi-aromatique, en particulier un PA MXD6 et un PA MXD10 ou choisi parmi PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, PA BACT/6T/11, un PA 11/BACT/10T, un PA 11/MPMDT/10T et un PA 11/MXDT/10T, un PVDF, un PEEK, PEKK et un PEI ou un mélange de ceux-ci. Avantageusement, le taux de fibres dans ledit matériau fibreux, constitué de fibre de carbone ou de verre, imprégné est compris de 45 à 65% en volume, de préférence de 50 à 60% en volume, en particulier de 54 à 60% en volume.

## Description des figures

La figure 1 présente un schéma d'une unité de mise en œuvre du procédé de fabrication d'un matériau fibreux pré-imprégné selon l'invention.

La figure 2 présente un schéma en coupe de deux rouleaux constitutifs d'une calandre telle qu'utilisée dans l'unité de la figure 1.

La figure 3 détaille une cuve (20) comprenant un lit fluidisé (22) avec une pièce d'embarrage gorgée, réglable en hauteur (82). Le bord de l'entrée de la cuve est équipé d'un rouleau rotatif 83a sur lequel défile la mèche 81a et le bord de la sortie cuve est équipé d'un rouleau rotatif 83b sur lequel défile la mèche 81b.

Le rouleau étant perpendiculaire au sens de défilement de la mèche, la gorge du rouleau n'est visible qu'en vue de face ou de dessus.

La figure 4 présente décrit un mode de réalisation à un seul rouleau cylindrique gorgé, avec une cuve (20) comprenant un lit fluidisé (22) dans lequel un seul rouleau cylindrique gorgé cylindrique est présent et montrant l'angle $\alpha_1$.

Les flèches au niveau de la fibre indiquent le sens de défilement de la fibre.

Le rouleau étant perpendiculaire au sens de défilement de la mèche, la gorge du rouleau n'est visible qu'en vue de face ou de dessus.

La figure 5 présente un mode de réalisation, sans être limité à celui-ci, à deux rouleaux cylindriques gorgés $R_1$ et $R_2$, $R_1$ précédant $R_2$, avec une cuve (20) comprenant un lit fluidisé (22) dans lequel les deux rouleaux cylindriques gorgés cylindriques sont à des hauteurs différentes par rapport au fond de la cuve ($R_2$ à une hauteur $H_2$ au-dessus de $R_1$ à une hauteur $H_1$) sont présents et montrant l'angle $\alpha_1$ et $\alpha_2$.

Les flèches au niveau de la mèche de fibre indiquent le sens de défilement de la mèche.

La figure 6 présente un exemple de mode de réalisation avec une cuve (20) comprenant un lit fluidisé (22) dans lequel les deux rouleaux cylindriques gorgés $R_1$ et $R_2$ sont cylindriques, au même niveau l'un par rapport à l'autre et côte à côte et montrant l'angle $\alpha_1$, et l'angle $\alpha_2 = 0°$ et la mèche passant entre les 2 rouleaux)

La figure 7 présente un exemple de mode de réalisation avec une cuve (20) comprenant un lit fluidisé (22) dans lequel les deux rouleaux cylindriques gorgés $R_1$ et $R_2$ sont cylindriques, au même niveau l'un par rapport à l'autre et côte à côte et montrant l'angle $\alpha_1$, et l'angle $\alpha_2 = 90°$ et la mèche passant au-dessous de $R_2$.

La figure 8 présente un exemple de mode de réalisation avec une cuve (20) comprenant un lit fluidisé (22) dans lequel deux rouleaux cylindriques gorgés cylindriques $R_1$ et $R_2$, $R_1$ précédant $R_2$, à des niveaux différents sont présents et montrant l'angle $\alpha_1$ et $\alpha_2$ et la mèche passant sous le rouleau R2.

La figure 9 présente un mode de réalisation avec une cuve (20) comprenant un lit fluidisé (22) à deux rouleaux cylindriques gorgés $R_1$ et $R_2$, $R_1$ précédant $R_2$, et un rouleau cylindrique gorgé R3 et montrant les angles $\alpha_1$, $\alpha_2$ et $\alpha_3$.

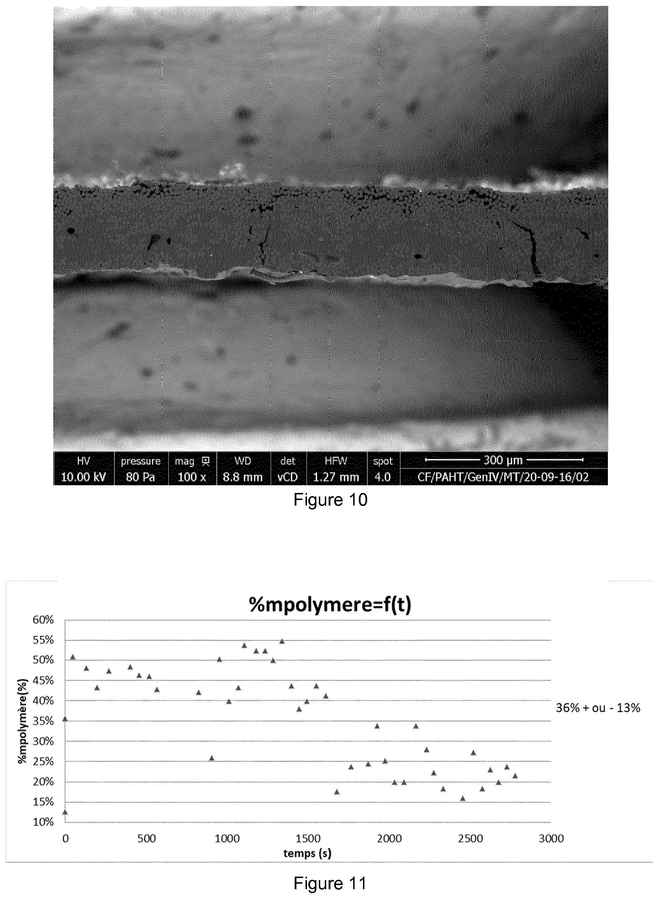

La figure 10 présente une photo prise au microscope électronique à balayage d'une vue en coupe d'un ruban de fibre de carbone ¼", obtenu à partir d'une mèche de fibres de carbone de 12K pré-imprégnées de façon homogène par une poudre de polyamide PA MPMDT/10T (67/33 %molaire) de D50 = 115$\mu$m selon le procédé de WO2018115736 (tel que décrit dans l'exemple comparatif 1) avec un rouleau non gorgé (lisse) et avec une faible tension à l'entrée du lit fluidisé de 800g.

Les fibres sont ensuite imprégnées à coeur par ladite résine après fusion de ladite poudre présente dans ladite mèche pré-imprégnées, après chauffage et passage sur une série d'embarrage, suivi d'un calandrage, pour former ledit ruban final.

L'analyse d'image faite sur un nombre d'image statistiquement représentatif dudit ruban, donne un taux de porosité de 3 % en excluant les bords du ruban.

La figure 11 présente l'évolution du pourcentage massique de MPMDT/10T imprégné dans la mèche en fonction du temps de l'exemple comparatif 1.

La figure 12 présente une photo prise au microscope électronique à balayage d'une vue en coupe d'un ruban de fibre de carbone ¼", obtenu à partir d'une mèche de fibres de carbone de 12K pré-imprégnées de façon homogène par une poudre de polyamide PA MPMDT/10T (67/33 %molaire) de D50 = 115$\mu$m selon le procédé de l'invention et tel que décrit dans l'exemple comparatif 2) c'est-à-dire avec un rouleau gorgé et avec une faible tension à l'entrée du lit fluidisé de 800g. Les fibres sont ensuite imprégnées à coeur par ladite résine après fusion de ladite poudre présente dans ladite mèche pré-imprégnées, après chauffage et passage sur une série d'embarrage, suivi d'un calandrage, pour former ledit ruban final.

après chauffage et calandrage) avec un rouleau gorgé avec une faible tension à l'entrée du lit fluidisé de 800g de l'exemple 2.

L'analyse d'image donne un taux de porosité de 1,5 % en excluant les bords du tape.

La figure 13 présente l'évolution du pourcentage massique de MPMDT/10T imprégné dans la mèche en fonction du temps de l'exemple 2.

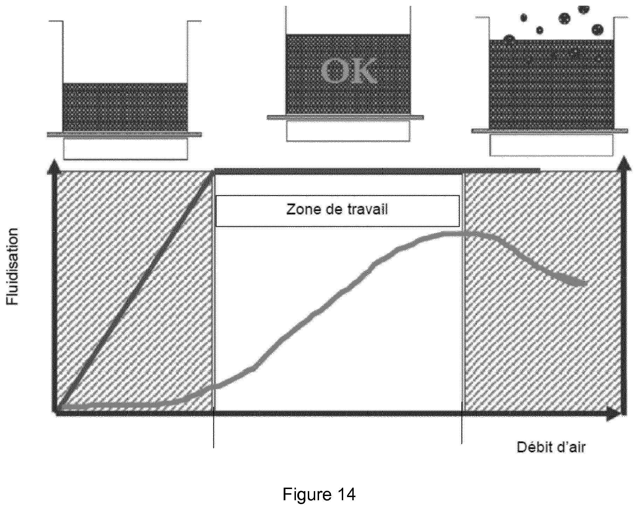

La figure 14 présente la fluidisation en fonction du débit d'air. Le débit d'air appliqué au lit fluidisé doit être compris entre le débit minimum de fluidisation (Umf) et le débit minimum de bullage (Umf)

Les exemples suivants illustrent de façon non limitative la portée de l'invention.

**Exemple 1 comparatif** : **mode opératoire générale de pré-imprégnation d'un matériau fibreux (fibre de carbone non ensimée) par une poudre de MPMDT/10T (67/33 % molaire) en lit fluidisé avec un seul rouleau cylindrique lisse et avec une faible tension de la mèche (800g) à l'entrée du lit fluidisé.**

Le mode opératoire suivant a été effectué:

- Un rouleau cylindrique lisse dans la cuve (L= 500 mm, l= 500mm, H= 600mm), diamètre 25 mm.
- Tension de la mèche à l'entrée du lit fluidisé : 800g
- Temps de séjour de 0,3 sec dans la poudre
- Angle $\alpha_1$ de 25°
- Epanouissement environ 100 % (soit une largeur multipliée par 2) pour une mèche en fibre de carbone d'Hexcel 12K AS4.
- D50 =115 $\mu$m, (D10=49$\mu$m, D90= 207$\mu$m) pour la poudre de MPMDT/10T.
- bord de la cuve équipé d'un rouleau fixe.

Le matériau fibreux (mèche de fibre de carbone de 12K) a été pré-imprégné de façon homogène par une poudre de polyamide MPMDT/10T de granulométrie ci-dessus définie selon ce mode opératoire et le ruban obtenu à partir de cette mèche pré-imprégnée, après fusion de la poudre et passage sur une série d'embarrage suivi d'un calandrage est présenté dans la figure 10 afin d'obtenir un ruban de ¼".

Les résultats obtenus montrent que le taux de polymère imprégné n'est pas stable au cours du temps (voir figure 11). La largeur de mèche dans et en sortie du lit fluide varient.

**Exemple 2: mode opératoire générale de pré-imprégnation d'un matériau fibreux (fibre de carbone non ensimée) par une poudre de polyamide en lit fluidisé avec un seul rouleau cylindrique gorgé avec une faible tension de la mèche en entrée du lit fluidisé (800g)**

Le mode opératoire suivant a été effectué:

- Un rouleau cylindrique gorgé dans la cuve (L= 500 mm, l= 500mm, H= 600mm), diamètre 25 mm en fond de gorge, 5mm de profondeur de gorge.
- Tension de la mèche à l'entrée du lit fluidisé : 800g
- Temps de séjour de 0,3 sec dans la poudre
- Angle $\alpha_1$ de 25°
- Epanouissement environ 100 % (soit une largeur multipliée par 2) pour une mèche en fibre de carbone non ensimée d'Hexcel 12K AS4
- D50 =115 $\mu$m, (D10=49$\mu$m, D90= 207$\mu$m) pour la poudre de MPMDT/10T (67/33 % molaire).
- bord de la cuve équipé d'un rouleau fixe.

Le matériau fibreux (mèche de fibre de carbone de 12K) a été pré-imprégné de façon homogène par une poudre de polyamide MPMDT/10T de granulométrie ci-dessus définie selon ce mode opératoire et le ruban obtenu à partir de cette mèche pré-imprégnée, après fusion de la poudre et passage sur une série d'embarrage suivi d'un calandrage est présenté dans la figure 12 pour d'obtenir une tape de ¼".

On observe qu'en présence d'un rouleau gorgé dans la poudre, et en utilisant une tension faible pour la fibre en entrée de lit fluide, le taux de polymère imprégné est stable au cours du temps (cf figure 13).

De plus, on n'observe pas de fuzz créé avant pré-imprégnation du fait de la faible tension appliquée à la fibre en entrée de lit fluide favorisant ainsi la bonne santé matière de la tape.

Cela démontre l'efficacité du procédé de pré-imprégnation par une poudre sèche en lit fluidisé avec un rouleau cylindrique gorgé avec une fibre non ensimée et contrôle du temps de séjour et de la tension dans la poudre par opposition à un rouleau lisse.

**Exemple 3 : Détermination du taux de porosité par analyse d'image**

La porosité a été déterminée par analyse d'image sur une mèche de fibre de carbone ½" imprégnée par du MPMDT/10T). Elle est de 5%.

**Exemple 4 : Détermination du taux de porosité l'écart relatif entre densité théorique et densité expérimentale (méthode générale)**

a) Les données requises sont :

- La densité de la matrice thermoplastique
- La densité des fibres
- Le grammage du renfort :

    • masse linéique (g/m) par exemple pour une tape ¼ de pouce (issu d'un seul rowing)
    • masse surfacique (g/m$^2$) par exemple pour une tape plus large ou un tissu

b) Mesures à réaliser :

Le nombre d'échantillons doit être au minimum de 30 pour que le résultat soit représentatif du matériau étudié.
Les mesures à réaliser sont :

- La dimension des échantillons prélevés:

    ◦ Longueur (si masse linéique connue).
    ◦ Longueur et largeur (si masse surfacique connue).

- La densité expérimentale des échantillons prélevés :
    ◦ Mesures de masse dans l'air et dans l'eau.

- La mesure du taux de fibres est déterminée selon ISO 1172 :1999 ou par analyse thermogravimétrique (ATG) telle que déterminé par exemple dans le document B. Benzler, Applikationslabor, Mettler Toledo, Giesen, UserCom 1/2001. La mesure du taux de fibres de carbone peut être déterminée selon ISO 14127 :2008.

Détermination du taux de fibres massique théorique :

a) Détermination du taux de fibres massique théorique :

$$\%Mf_{th} = \frac{m_l.L}{Me_{air}}$$

Avec

$m_l$ la masse linéique de la tape,
$L$ la longueur de l'échantillon et
$Me_{air}$ la masse de l'échantillon mesuré dans l'air.

La variation du taux massique de fibres est supposée être directement liée à une variation du taux de matrice sans prendre en compte la variation de la quantité des fibres dans le renfort.

b) Détermination de la densité théorique :

$$d_{th} = \frac{1}{\dfrac{1 - \%Mf_{th}}{d_m} + \dfrac{\%Mf_{th}}{d_f}}$$

Avec $d_m$ et $d_f$ les densités respectives de la matrice et des fibres.
La densité théorique ainsi calculée est la densité accessible s'il n'y a aucune porosité dans les échantillons.

c) Evaluation de la porosité :

La porosité est alors l'écart relatif entre densité théorique et densité expérimentale.

**Revendications**

1. Procédé de fabrication d'un matériau fibreux pré-imprégné comprenant un matériau fibreux en fibres continues et au moins une matrice polymère thermoplastique, **caractérisé en ce que** ledit matériau fibreux pré-imprégné est réalisé en un ruban unique unidirectionnel ou en une pluralité de rubans parallèles unidirectionnels et **en ce que** ledit procédé comprend une étape de pré-imprégnation, en particulier homogène, dudit matériau fibreux se présentant sous forme d'une mèche (81a) ou de plusieurs mèches parallèles par ladite au moins une matrice polymère thermoplastique se présentant sous forme de poudre, ladite étape de pré-imprégnation étant effectuée par voie sèche dans une cuve (20) comprenant un lit fluidisé (22) comprenant au moins une pièce d'embarrage gorgée (82),

ladite mèche (81a) ou lesdites mèches étant en contact avec une partie ou la totalité de la surface de ladite au moins une pièce d'embarrage gorgée (82) et ladite mèche (81a) ou lesdites mèches comprenant jusqu'à 0,1% en poids d'ensimage,
et le contrôle du taux de ladite au moins une matrice polymère thermoplastique dans ledit matériau fibreux étant effectué par contrôle du temps de séjour dudit matériau fibreux dans la poudre et par contrôle constant de la tension de ladite mèche (81a) ou desdites mèches lorsqu'elle(s) pénètre(nt) dans le lit fluidisé.

2. Procédé selon la revendication 1, **caractérisé en ce que** ladite mèche (81a) ou lesdites mèches est(sont) non ensimées.

3. Procédé selon la revendication 1 ou 2, **caractérisé en ce que** la tension de ladite mèche (81a) ou desdites mèches lorsqu'elle(s) pénètre(nt) dans le lit fluidisé est jusqu'à 1000g.

4. Procédé selon la revendication 3, **caractérisé en ce que** la tension de ladite mèche (81a) ou desdites mèches lorsqu'elle(s) pénètre(nt) dans le lit fluidisé est comprise de 100 à 1000g, en particulier de 200 à 1000g, plus particulièrement de 300 à 850g.

5. Procédé selon l'une des revendications 1 à 4, **caractérisé en ce que** la largeur minimum de ladite mèche (81a) ou desdites mèches est supérieure à la largeur de la gorge de ladite pièce d'embarrage gorgée.

6. Procédé selon l'une des revendications 1 à 5, **caractérisé en ce que** ladite étape de pré-imprégnation est effectuée avec épanouissement simultané de ladite mèche (81a) ou desdites mèches entre l'entrée et la sortie dudit lit fluidisé (22).

7. Procédé selon l'une des revendications 1 à 6, **caractérisé en ce que** le diamètre moyen D50 en volume des particules de poudre de polymère thermoplastique étant compris de 30 à 300 $\mu$m, notamment de 50 à 200 $\mu$m, plus particulièrement de 70 à 200$\mu$m.

8. Procédé selon l'une des revendications 1 à 7, **caractérisé en ce que** le taux de fibres dans ledit matériau fibreux imprégné est compris de 45 à 65 % en volume, de préférence de 50 à 60% en volume, notamment de 54 à 60%.

9. Procédé selon l'une des revendications 1 à 8, **caractérisé en ce que** le temps de séjour dans la poudre est compris de 0,01s à 10s, préférentiellement de 0,1s à 5s, et en particulier de 0,1s à 3s.

10. Procédé selon l'une des revendications 1 à 9, **caractérisé en ce que** ladite pièce d'embarrage gorgée est un rouleau cylindrique gorgé et le pourcentage d'épanouissement de ladite mèche (81a) ou desdites mèches entre l'entrée et la sortie de ladite cuve étant compris de 1% à 400%, préférentiellement entre 30% et 400% préférentiellement entre 30% et 150%, préférentiellement entre 50% et 150%.

11. Procédé selon la revendication 10, **caractérisé en ce que** un seul rouleau cylindrique gorgé est présent dans le lit fluidisé (22) et ladite pré-imprégnation est effectuée au niveau de l'angle $\alpha_1$ formé par ladite mèche (81a) ou lesdites mèches entre l'entrée dudit rouleau cylindrique gorgé et la tangente verticale audit rouleau cylindrique gorgé.

12. Procédé selon la revendication 11, **caractérisé en ce que** l'angle $\alpha_1$ est compris de 0 à 89°, préférentiellement 5° à 85°, préférentiellement de 5° à 45°, préférentiellement de 5° à 30°.

13. Procédé selon la revendication 10, **caractérisé en ce que** deux rouleaux cylindriques gorgés $R_1$ et $R_2$ sont présents dans ledit lit fluidisé (22) et ladite pré-imprégnation est effectuée au niveau de l'angle $\alpha_1$ formé par ladite mèche (81a) ou lesdites mèches entre l'entrée dudit rouleau cylindrique gorgé $R_1$ et la tangente verticale audit rouleau cylindrique gorgé et/ou au niveau de l'angle $\alpha_2$ formé par ladite mèche (81a) ou lesdites mèches entre l'entrée dudit rouleau cylindrique gorgé $R_2$ et la tangente verticale audit rouleau cylindrique gorgé $R_2$, ledit rouleau cylindrique gorgé $R_1$ (dans le sens de défilement du procédé) précédant ledit rouleau cylindrique gorgé $R_2$ et ladite mèche (81a) ou lesdites mèche pouvant passer au-dessus ou en dessous du rouleau $R_2$.

14. Procédé selon la revendication 13, **caractérisé en ce que** les deux rouleaux cylindriques gorgés $R_1$ et $R_2$ sont distants de 0,15 mm à la longueur équivalente à la dimension maximale de la cuve (20), préférentiellement distants de 10mm à 50mm et **en ce que** la différence de hauteur entre les deux rouleaux cylindriques gorgés $R_1$ et $R_2$ est comprise de 0 à la hauteur correspondant à la hauteur maximale de la cuve (20) soustraite des diamètres des deux rouleaux cylindriques gorgés, préférentiellement comprise de 0,15mm à la hauteur correspondant à la hauteur maximale de la cuve (20) soustraite des diamètres des deux rouleaux cylindriques gorgés, plus préférentiellement à une différence de hauteur comprise entre 10mm et 300mm, $R_2$ étant le rouleau cylindrique gorgé supérieur.

15. Procédé selon l'une des revendications 1 à 14, **caractérisé en ce qu'**une seule matrice polymère thermoplastique est utilisée et la poudre de polymère thermoplastique est fluidisable.

16. Procédé selon l'une des revendications 1 à 15, **caractérisé en ce qu'**il comprend de plus au moins une étape de chauffage de la matrice thermoplastique permettant la fusion ou le maintien en fusion dudit polymère thermoplastique après pré-imprégnation,

> ladite au moins une étape de chauffage étant effectuée au moyen d'au moins une pièce d'embarrage (E) conductrice ou non de la chaleur et d'au moins un système de chauffage, à l'exception d'une calandre chauffante,
> ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) au niveau du système de chauffage.

17. Procédé selon l'une des revendications 1 à 16, **caractérisé en ce qu'**il comprend de plus une étape de mise en forme de ladite mèche ou desdites mèches parallèles dudit matériau fibreux pré-imprégné, par calandrage au moyen d'au moins une calandre chauffante sous forme de ruban unique unidirectionnel ou d'une pluralité de rubans ou nappes parallèles unidirectionnels avec, dans ce dernier cas, ladite calandre chauffante comportant une pluralité de gorges de calandrage, de préférence jusqu'à 300 gorges de calandrage, en conformité avec le nombre desdits rubans et avec une pression et/ou un écartement entre les rouleaux de ladite calandre régulés par un système asservi.

18. Procédé selon la revendication 17, **caractérisé en ce que** l'étape de calandrage est réalisée au moyen d'une pluralité de calandres (51, 52, 53) chauffantes, montées en parallèle et/ou en série par rapport au sens de défilement des mèches (81a) de fibres.

19. Procédé selon l'une des revendications 17 ou 18, **caractérisé en ce que** ladite (ou lesdites) calandre(s) chauffante(s) (51, 52, 53) comprend (comprennent) un système de chauffage intégré par induction ou par microondes, de préférence par microondes, couplé à la présence de charges carbonées dans ledit polymère thermoplastique ou mélange de polymères thermoplastiques.

20. Procédé selon l'une des revendications 17 à 19, **caractérisé en ce que** ladite (ou lesdites) calandre(s) chauffante(s) (51, 52, 53) est (sont) couplée(s) à un dispositif de chauffage complémentaire rapide (41, 42, 43), situé avant et/ou après ladite (chaque) calandre (51, 52, 53), en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme ou un gaz chaud.

21. Procédé selon l'une des revendications 1 à 20, **caractérisé en ce que** ladite ou lesdites étape(s) de pré-imprégnation est(sont) complétée(s) par une étape de recouvrement de ladite mèche (81a) unique ou de ladite pluralité de mèches parallèles après pré-imprégnation par la poudre, ladite étape de recouvrement étant réalisée avant ladite étape de calandrage, par un polymère thermoplastique fondu, pouvant être identique ou différent dudit polymère sous forme de poudre en lit fluidisé (22), ledit polymère fondu étant de préférence de même nature que ledit polymère sous forme de poudre en lit fluidisé (22), de préférence avec ledit recouvrement s'effectuant par extrusion en tête d'équerre par rapport à ladite mèche (81a) unique ou à ladite pluralité de mèches parallèles.

22. Procédé selon l'une des revendications 1 à 21, **caractérisé en ce que** ledit polymère thermoplastique comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges.

23. Procédé selon l'une des revendications 1 à 22, **caractérisé en ce que** le dit polymère thermoplastique comprend en outre des polymères à cristaux liquides ou du poly(butylène téréphtalate) cyclisé, ou des mélanges en contenant comme additifs.

24. Procédé selon l'une des revendications 1 à 23, **caractérisé en ce que** ledit au moins polymère thermoplastique est sélectionné parmi : les polyaryl éther cétones (PAEK), en particulier le poly(éther éther cétone) (PEEK) ; les polyaryl éther cétone cétone (PAEKK), en particulier le poly(éther cétone cétone) (PEKK) ; les polyéther-imides (PEI) aromatiques ; les polyaryl sulfones, en particulier les polyphénylène sulfones (PPSU) ; les polyarylsulfures, en particulier les polyphénylène sulfures (PPS) ; les polyamides (PA), en particulier polyamides aromatiques éventuellement modifiées par unités urées ; les PEBA, les polyacrylates en particulier le polyméthacrylate de méthyle (PMMA) ; les polyoléfines, en particulier le polypropylène, l'acide polylactique (PLA), l'alcool polyvinylique (PVA), et les polymères fluorés en particulier le polyfluorure de vinylidène (PVDF) ou le polytetrafluoroéthylène (PTFE) ou le polychlorotrifluoroéthylène (PCTFE); et leurs mélanges, notamment un mélange de PEKK et de PEI, de préférence de 90-10% en poids à 60-40% en poids, en particulier de 90-10% en poids à 70-30% en poids.

25. Procédé selon la revendication 24, **caractérisé en ce que** ledit au moins polymère thermoplastique est un polymère dont la température de transition vitreuse est telle que Tg ≥ 80°C ou un polymère semi-cristallin dont la température de fusion Tf ≥ 150°C.

26. Procédé selon l'une des revendications 1 à 25, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

**Patentansprüche**

1. Verfahren zur Herstellung eines vorimprägnierten Fasermaterials, umfassend ein Fasermaterial aus Endlosfasern und mindestens eine thermoplastische Polymermatrix, **dadurch gekennzeichnet, dass** das vorimprägnierte Fasermaterial in einem einzigen unidirektionalen Band oder in einer Vielzahl von parallelen unidirektionalen Bändern hergestellt ist und dass das Verfahren einen Schritt des, insbesondere homogenen, Vorimprägnierens des Fasermaterials in Form eines Rovings (81a) oder mehrerer paralleler Rovings durch die mindestens eine thermoplastische Polymermatrix in Pulverform umfasst, wobei der Vorimprägnierungsschritt durch ein Trockenverfahren in einem Behälter (20) durchgeführt wird, der eine Wirbelschicht (22) umfasst, die mindestens ein gerilltes Spannstück (82) umfasst,

wobei der Roving (81a) oder die Rovings in Kontakt mit einem Teil oder der gesamten Oberfläche des mindestens einen gerillten Spannstücks (82) sind und der Roving (81a) oder die Rovings bis zu 0,1% Schlichtegewicht umfassen,

und wobei die Steuerung des Anteils der mindestens einen thermoplastischen Polymermatrix in dem Fasermaterial durch Steuerung der Verweilzeit des Fasermaterials in dem Pulver und durch konstante Steuerung der Spannung des Rovings (81a) oder der Rovings durchgeführt wird, wenn er oder sie in die Wirbelschicht eintaucht oder eintauchen.

2. Verfahren nach Anspruch 1, **dadurch gekennzeichnet, dass** der Roving (81a) oder die Rovings nicht geschlichtet ist (sind).

3. Verfahren nach Anspruch 1 oder 2, **dadurch gekennzeichnet, dass** die Spannung des Rovings (81a) oder der Rovings beim Eintauchen in die Wirbelschicht bis zu 1000 g beträgt.

4. Verfahren nach Anspruch 3, **dadurch gekennzeichnet, dass** die Spannung des Rovings (81a) oder der Rovings beim Eintauchen in die Wirbelschicht im Bereich zwischen 100 und 1000 g, insbesondere zwischen 200 und 1000 g, genauer zwischen 300 und 850 g liegt.

5. Verfahren nach einem der Ansprüche 1 bis 4, **dadurch gekennzeichnet, dass** die Mindestbreite des Rovings (81a) oder der Rovings größer als die Breite der Rille des gerillten Spannstücks ist.

6. Verfahren nach einem der Ansprüche 1 bis 5, **dadurch gekennzeichnet, dass** der Vorimprägnierungsschritt bei gleichzeitiger Ausdehnung des Rovings (81a) oder der Rovings zwischen dem Eintritt und dem Austritt der Wirbelschicht (22) erfolgt.

7. Verfahren nach einem der Ansprüche 1 bis 6, **dadurch gekennzeichnet, dass** der mittlere Volumendurchmesser D50 der thermoplastischen Polymerpulverpartikel zwischen 30 und 300 $\mu$m, insbesondere 50 bis 200 $\mu$m, genauer 70 bis 200 $\mu$m beträgt.

8. Verfahren nach einem der Ansprüche 1 bis 7, **dadurch gekennzeichnet, dass** der Fasergehalt in dem imprägnierten Fasermaterial im Bereich zwischen 45 bis 65 Vol.-%, vorzugsweise 50 bis 60 Vol.-%, insbesondere 54 bis 60 Vol.-% liegt.

9. Verfahren nach einem der Ansprüche 1 bis 8, **dadurch gekennzeichnet, dass** die Verweilzeit im Pulver im Bereich zwischen 0,01 s bis 10 s, vorzugsweise zwischen 0,1s bis 5 s und insbesondere zwischen 0,1s bis 3 s liegt.

10. Verfahren nach einem der Ansprüche 1 bis 9, **dadurch gekennzeichnet, dass** das gerillte Spannstück eine gerillte zylindrische Rolle aufweist und der Prozentsatz der Ausdehnung des Rovings (81a) oder der Rovings zwischen dem Eintritt und dem Austritt des Behälters im Bereich zwischen 1 % und 400 %, vorzugsweise zwischen 30 % und 400 %, vorzugsweise zwischen 30 % und 150 %, vorzugsweise zwischen 50 % und 150 % liegt.

11. Verfahren nach Anspruch 10, **dadurch gekennzeichnet, dass** eine einzelne gerillte zylindrische Rolle in der Wirbelschicht (22) vorhanden ist und die Imprägnierung in dem Winkel $\alpha 1$ erfolgt, der durch den Roving (81a) oder die Rovings zwischen dem Eintritt der gerillten zylindrischen Rolle und der vertikalen Tangente an der gerillten zylindrischen Rolle gebildet wird.

12. Verfahren nach Anspruch 11, **dadurch gekennzeichnet, dass** der Winkel $\alpha 1$ im Bereich zwischen 0 und 89°, vorzugsweise zwischen 5° und 85°, vorzugsweise zwischen 5° und 45°, vorzugsweise zwischen 5° und 30° liegt.

13. Verfahren nach Anspruch 10, **dadurch gekennzeichnet, dass** zwei gerillte zylindrische Rollen $R_1$ et $R_2$ in der Wirbelschicht (22) vorhanden sind und die Vorimprägnierung in dem Winkel $\alpha 1$, der durch den Roving (81a) oder die Rovings zwischen dem Eintritt der gerillten zylindrischen Rolle $R_1$ und der vertikalen Tangente an der gerillten zylindrischen Rolle gebildet wird, und/oder in dem Winkel $\alpha 2$, der durch den Roving (81a) oder die Rovings zwischen dem Eintritt der gerillten zylindrischen Rolle $R_2$ und der vertikalen Tangente an der gerillten zylindrischen Rolle $R_2$ gebildet wird, erfolgt, wobei die gerillte zylindrische Rolle $R_1$, welche (in Laufrichtung des Verfahrens) der gerillten zylindrischen Rolle $R_2$ vorgelagert ist, und der Roving (81a) oder die Rovings über oder unter der Rolle $R_2$ durchlaufen können.

14. Verfahren nach Anspruch 13, **dadurch gekennzeichnet, dass** die beiden gerillten zylindrischen Rollen $R_1$ et $R_2$ einen Abstand von 0,15 mm bis zu der Länge haben, die der maximalen Abmessung des Behälters (20) entspricht, vorzugsweise einen Abstand zwischen 10 mm und 50 mm, und dass der Höhenunterschied zwischen den beiden gerillten zylindrischen Rollen $R_1$ et $R_2$ in einem Bereich von 0 bis zu der Höhe liegt, die der maximalen Höhe des Behälters (20) entspricht, minus den Durchmessern der beiden gerillten zylindrischen Rollen, vorzugsweise von 0,15 mm bis zu der Höhe, die der maximalen Höhe des Behälters (20) entspricht, minus den Durchmessern der beiden gerillten zylindrischen Rollen, bevorzugter einem Höhenunterschied in dem Bereich zwischen 10 mm und 300 mm, wobei $R_2$ die obere gerillte zylindrische Rolle ist.

**15.** Verfahren nach einem der Ansprüche 1 bis 14, **dadurch gekennzeichnet, dass** eine einzelne thermoplastische Polymermatrix verwendet wird und das thermoplastische Polymerpulver fluidisierbar ist.

**16.** Verfahren nach einem der Ansprüche 1 bis 15, **dadurch gekennzeichnet, dass** es zusätzlich mindestens einen Schritt des Erhitzens der thermoplastischen Matrix umfasst,

der die Verschmelzung oder Beibehaltung der Verschmelzung des thermoplastischen Polymers nach der Vorimprägnierung ermöglicht, wobei der mindestens eine Schritt des Erhitzens mittels mindestens eines wärmeleitfähigen oder nicht leitfähigen Spannstücks (E) und mindestens eines Erhitzungssystems durchgeführt wird, mit Ausnahme eines beheizten Kalanders, wobei der Roving oder die Rovings mit einem Teil oder der Gesamtheit der Oberfläche des mindestens einen Spannstücks (E) in Kontakt ist oder sind und teilweise oder vollständig an der Oberfläche des mindestens einen Spannstücks (E) auf Höhe des Erhitzungssystems vorbei läuft oder vorbei laufen.

**17.** Verfahren nach einem der Ansprüche 1 bis 16, **dadurch gekennzeichnet, dass** es ferner einen Formgebungsschritt des Rovings oder der parallelen Rovings des vorimprägnierten Fasermaterials durch Kalandrieren mittels mindestens eines beheizten Kalanders in Form eines einzelnen unidirektionalen Bandes oder einer Vielzahl von parallelen unidirektionalen Bändern umfasst, wobei im letzten Fall der beheizte Kalander eine Vielzahl von Kalandrierungsrillen, vorzugsweise bis zu 300 Kalandrierungsrillen, in Übereinstimmung mit der Anzahl der Bänder und mit einem Druck und/oder einem Abstand zwischen den Walzen des Kalanders, die durch ein Servosystem geregelt werden, umfasst.

**18.** Verfahren nach Anspruch 17, **dadurch gekennzeichnet, dass** der Kalandrierungsschritt mittels einer Vielzahl von beheizten Kalandern (51, 52, 53) ausgeführt wird, die bezüglich der Laufrichtung der Rovings (81a) aus Fasern parallel und/oder in Reihe montiert sind.

**19.** Verfahren nach einem der Ansprüche 17 oder 18, **dadurch gekennzeichnet, dass** der (oder die) beheizte(n) Kalander (51, 52, 53) ein integriertes Erhitzungssystem durch Induktion oder durch Mikrowellen, vorzugsweise durch Mikrowellen, umfasst (umfassen), gekoppelt an das Vorhandensein von kohlenstoffhaltigen Füllstoffen in dem thermoplastischen Polymer oder der Mischung aus thermoplastischen Polymeren.

**20.** Verfahren nach einem der Ansprüche 17 bis 19, **dadurch gekennzeichnet, dass** der (die) beheizte(n) Kalander (51, 52, 53) mit einer schnellen zusätzlichen Erhitzungsvorrichtung (41, 42, 43) gekoppelt ist (sind), die sich vor und/oder nach dem (jedem der) Kalander (51, 52, 53) befindet, insbesondere eine Erhitzungsvorrichtung durch Mikrowellen oder Induktion, gekoppelt an das Vorhandensein von kohlenstoffhaltigen Füllstoffen in dem Polymer oder in der Mischung aus Polymeren, oder eine Infrarot- (IR) oder Laser-Erhitzungsvorrichtung, oder durch direkten Kontakt mit einer anderen Wärmequelle wie einer Flamme oder einem Heißgas.

**21.** Verfahren nach einem der Ansprüche 1 bis 20, **dadurch gekennzeichnet, dass** der oder die Imprägnierungsschritt(e) durch einen Beschichtungsschritt des einzelnen Rovings (81a) oder der Vielzahl von parallelen Rovings nach der Vorimprägnierung durch das Pulver ergänzt wird (werden), wobei der Beschichtungsschritt vor dem Kalandrierungsschritt durch ein geschmolzenes thermoplastisches Polymer ausgeführt wird, das mit dem Polymer in Pulverform in einer Wirbelschicht (22) identisch oder davon verschieden sein kann, wobei das geschmolzene Polymer vorzugsweise der gleichen Art ist wie das Polymer in Pulverform in einer Wirbelschicht (22), wobei die Beschichtung in Bezug auf den einzelnen Roving (81a) oder die Vielzahl von parallelen Rovings vorzugsweise durch Querspritzkopfextrusion erfolgt.

**22.** Verfahren nach einem der Ansprüche 1 bis 21, **dadurch gekennzeichnet, dass** das thermoplastische Polymer ferner kohlenstoffhaltige Füllstoffe umfasst, insbesondere Ruß oder kohlenstoffhaltige Nanofüllstoffe, vorzugsweise ausgewählt aus kohlenstoffhaltigen Nanofüllstoffen, insbesondere Graphenen und/oder Kohlenstoff-Nanoröhrchen und/oder Kohlenstoff-Nanofibrillen oder deren Mischungen.

**23.** Verfahren nach einem der Ansprüche 1 bis 22, **dadurch gekennzeichnet, dass** das thermoplastische Polymer ferner Flüssigkritallpolymere oder cyclisiertes Poly(butylenterephthalat) oder dies enthaltene Mischungen als Additiv umfasst.

**24.** Verfahren nach einem der Ansprüche 1 bis 23, **dadurch gekennzeichnet, dass** das mindestens eine thermoplastische Polymer ausgewählt ist aus: Poly(aryletherketonen) (PAEK), insbesondere Poly(etheretherketon) (PEEK); Poly(aryletherketonketon) (PAEKK), insbesondere Poly(etherketonketon) (PEKK); aromatischen Polyetherimiden (PEI); Polyarylsulfonen, insbesondere Polyphenylensulfonen (PPSU); Polyarylsulfiden, insbesondere Polyphenylensulfiden (PPS); Polyamiden (PA), insbesondere aromatischen Polyamiden, gegebenenfalls modifiziert durch Harnstoffeinheiten; PEBA, Polyacrylaten, insbesondere Polymethylmethacrylat (PMMA); Polyolefinen, insbesondere Polypropylen, Polymilchsäure (PLA), Polyvinylalkohol (PVA) und fluorierte Polymere, insbesondere Polyvinylidenfluorid (PVDF) oder Polytetrafluorethylen (PTFE) oder Polychlortrifluorethylen (PCTFE); und deren Mischungen, insbesondere einer Mischung aus PEKK und PEI, vorzugsweise von 90-10 Gew.-% bis 60-40 Gew.-%, insbesondere von 90-10 Gew.-% bis 70-30 Gew.-%.

25. Verfahren nach Anspruch 24, **dadurch gekennzeichnet, dass** mindestens das thermoplastische Polymer ein Polymer ist, dessen Glasübergangstemperatur derart ist, dass Tg > 80 °C, oder ein halbkristallines Polymer ist, dessen Schmelztemperatur Tf > 150 °C ist.

26. Verfahren nach einem der Ansprüche 1 bis 25, **dadurch gekennzeichnet, dass** das Fasermaterial Endlosfasern umfasst, ausgewählt aus Kohlenstoff-, Glas-, Siliciumcarbid-, Basalt-, Siliciumdioxidfasern, Naturfasern, insbesondere aus Leinen oder Hanf, Lignin, Bambus, Sisal, Seide, oder cellulosischen Fasern, insbesondere Viskose, oder amorphen thermoplastischen Fasern mit einer Glasübergangstemperatur Tg höher als die Tg des Polymers oder der Mischung aus Polymeren, wenn letzteres amorph ist, oder höher als die Tf des Polymers oder der Mischung aus Polymeren, wenn letzteres halbkristallin ist, oder thermoplastischen halbkristallinen Fasern mit Schmelztemperatur Tf höher als die Tg des Polymers oder der Mischung aus Polymeren, wenn letzteres amorph ist, oder höher als die Tf des Polymers oder der Mischung aus Polymeren, wenn letzteres halbkristallin ist, oder einer Mischung aus zwei oder mehreren der Fasern, vorzugsweise einer Mischung aus Kohlenstoff-, Glas- oder Siliciumcarbidfasern, besonders Kohlenstofffasern.

**Claims**

1. A method of manufacturing a pre-impregnated fibrous material comprising a fibrous material made of continuous fibers and at least one thermoplastic polymer matrix, **characterized in that** said pre-impregnated fibrous material is produced as a single unidirectional band or a plurality of unidirectional parallel bands and **in that** said method comprises a pre-impregnation step, in particular homogeneously, of said fibrous material while it is in the form of a strand (81a) or several parallel strands with said at least one thermoplastic polymer matrix in powdered form, said pre-impregnation step being carried out by dry process in a tank (20) comprising a fluidized bed (22) comprising at least one grooved roller component (82),

said strand(s) (81a) being in contact with part or all of the surface of said at least one grooved roller component (82) and said strand(s) (81a) comprising up to 0.1% by weight of sizing, and the control of the rate of said at least one thermoplastic polymer matrix in said fibrous material being done by controlling the dwell time of said fibrous material in the powder and by constant control of the tension of said strand(s) (81a) when it or they penetrate the fluidized bed.

2. The method according to claim 1, **characterized in that** said strand (81a) or said strands is(are) non-sized.

3. The method according to claim 1 or 2, **characterized in that** the tension of said strand (81a) or of said strands when it(they) penetrate(s) the fluidized bed is up to 1000 g.

4. The method according to claim 3, **characterized in that** the tension of said strand (81a) or of said strands when it(they) penetrate(s) the fluidized bed is from 100 to 1000 g, in particular from 200 to 1000 g, more particularly from 300 to 850 g.

5. The method according to one of claims 1 to 4, **characterized in that** the minimum width of said strand (81a) or of said strands is greater than the width of the groove of said grooved roller component.

6. The method according to one of claims 1 to 5, **characterized in that** said pre-impregnation step is carried out with simultaneous spreading of said strand (81a) or said strands between the inlet and the outlet of said fluidized bed (22).

7. The method according to one of claims 1 to 6, **characterized in that** the volume-average diameter D50 of the particles of thermoplastic polymer powder being from 30 to 300 $\mu$m, especially from 50 to 200 $\mu$m, more particularly from 70 to 200 $\mu$m.

8. The method according to one of claims 1 to 7, **characterized in that** the fiber level in said impregnated fibrous material is comprised from 45 to 65% by volume, preferably from 50 to 60% by volume, especially from 54 to 60%.

9. The method according to one of claims 1 to 8, **characterized in that** the dwell time in the powder is from 0.01 s to 10 s, preferentially from 0.1 s to 5 s, and in particular from 0.1 s to 3 s.

10. The method according to one of claims 1 to 9, **char-**

**acterized in that** said grooved roller component is a grooved cylindrical roller and the spreading percentage of said strand (81a) or of said strands between the inlet and the outlet of said tank is from 1% to 400%, preferentially between 30% and 400%, preferentially between 30% and 150%, preferentially between 50% and 150%.

11. The method according to claim 10, **characterized in that** a single grooved cylindrical roller is present in the fluidized bed (22) and said pre-impregnation is carried out at the angle $\alpha_1$ formed by said strand (81a) or said strands between the inlet of said grooved cylindrical roller and the vertical tangent to said grooved cylindrical roller.

12. The method according to claim 11, **characterized in that** the angle $\alpha_1$ is from 0° to 89°, preferentially from 5° to 85°, preferentially from 5° to 45°, preferentially from 5° to 30°.

13. The method according to claim 10, **characterized in that** two grooved cylindrical rollers $R_1$ and $R_2$ are present in said fluidized bed (22) and said pre-impregnation is carried out at the angle $\alpha_1$ formed by said strand (81a) or said strands between the inlet of said grooved cylindrical roller $R_1$ and the vertical tangent to said grooved cylindrical roller and/or at the angle $\alpha_2$ formed by said strand (81a) or said strands between the inlet of said grooved cylindrical roller $R_2$ and the vertical tangent to said grooved cylindrical roller $R_2$, said grooved cylindrical roller $R_1$ (in the direction in which the process proceeds) preceding said grooved cylindrical roller $R_2$ and said strand (81a) or said strands being able to pass above or below the roller $R_2$.

14. The method according to claim 13, **characterized in that** the distance between the two grooved cylindrical rollers $R_1$ and $R_2$ is from 0.15 mm to the length equivalent to the maximum dimension of the tank (20), preferentially from 10 mm to 50 mm, and **in that** the height difference between the two grooved cylindrical rollers $R_1$ and $R_2$ is from 0 to the height corresponding to the maximum height of the tank (20) subtracted from the diameters of the two grooved cylindrical rollers, preferentially from 0.15 mm to the height corresponding to the maximum height of the tank (20) subtracted from the diameters of the two grooved cylindrical rollers, more preferentially to a height difference of between 10 mm and 300 mm, $R_2$ being the upper grooved cylindrical roller.

15. The method according to one of claims 1 to 14, **characterized in that** a single thermoplastic polymer matrix is used and the thermoplastic polymer powder is fluidizable.

16. The composition according to one of claims 1 to 15, **characterized in that** it further comprises at least one step of heating the thermoplastic matrix making it possible to melt said thermoplastic polymer or keep it molten after pre-impregnation,

    the at least one heating step being carried out by means of at least one heat-conducting or non-heat-conducting roller component (E) and at least one heating system, with the exception of a heating calender,
    said strand or strands being in contact with part or all of the surface of said at least one roller component (E) and partially or totally running over the surface of said at least one roller component (E) at the level of the heating system.

17. The method according to one of claims 1 to 16, **characterized in that** it additionally comprises a step for shaping said strand or said parallel strands of said pre-impregnated fibrous material, by calendering using at least one heating calender in the form of a single unidirectional band or a plurality of parallel unidirectional bands or sheets with, in the latter case, said heating calender comprising a plurality of calendering grooves, preferably up to 300 calendering grooves, in accordance with the number of said bands and with a pressure and/or separation between the rollers of said calender regulated by a closed-loop control system.

18. The method according to claim 17, **characterized in that** the calendering step is carried out using a plurality of heating calenders (51, 52, 53), mounted in parallel and/or in series relative to the direction of passage of the fiber strands (81a).

19. The method according to one of claims 17 or 18, **characterized in that** said heating calender(s) (51, 52, 53) comprise(s) an integrated induction or microwave heating system, preferably microwave, coupled with the presence of carbon-based fillers in said thermoplastic polymer or mixture of thermoplastic polymers.

20. The method according to one of claims 17 to 19, **characterized in that** said heating calender(s) (51, 52, 53) is(are) coupled to an additional rapid heating device (41, 42, 43), located before and/or after said (each) calender (51, 52, 53), in particular a microwave or induction heating device coupled with the presence of carbon-based fillers in said polymer or in said mixture of polymers, or an infrared IR or laser heating device or a device for heating by direct contact with another source of heat such as a flame or a hot gas.

21. The method according to one of claims 1 to 20, **char-**

**acterized in that** said pre-impregnation step(s) is(are) supplemented by a step of covering said single strand (81a) or said plurality of parallel strands after pre-impregnation by the powder, said covering step being carried out before said calendering step, with a molten thermoplastic polymer, which may be identical to or different from said polymer in powder form in fluidized bed (22), said molten polymer preferably being of the same nature as said polymer in powder form in fluidized bed (22), preferably with said covering being carried out by crosshead-die extrusion relative to said single strand (81a) or said plurality of parallel strands.

22. The method according to one of claims 1 to 21, **characterized in that** said thermoplastic polymer further comprises carbon-based fillers, in particular carbon black or carbon nanofillers, preferably selected from carbon-based nanofillers, in particular graphenes and/or carbon nanotubes and/or carbon nanofibrils or mixtures thereof.

23. The method according to one of claims 1 to 22, **characterized in that** said thermoplastic polymer further comprises liquid crystal polymers or cyclized poly(butylene terephthalate), or mixtures containing these as additives.

24. The method according to one of claims 1 to 23, **characterized in that** said at least one thermoplastic polymer is selected from: polyaryl ether ketones (PAEK), in particular poly(ether ether ketone) (PEEK); polyaryl ether ketone ketone (PAEKK), in particular polyether ketone ketone (PEKK); aromatic polyether imides (PEI); polyaryl sulfones, in particular polyphenylene sulfones (PPSU); polyarylsulfides, in particular polyphenylene sulfides (PPS); polyamides (PA), in particular aromatic polyamides optionally modified by urea units; PEBAs, polyacrylates, in particular polymethyl methacrylate (PMMA); polyolefins, in particular polypropylene, polylactic acid (PLA), polyvinyl alcohol (PVA), and fluorinated polymers, in particular polyvinylidene fluoride (PVDF) or polytetrafluoroethylene (PTFE) or polychlorotrifluoroethylene (PCTFE); and mixtures thereof, especially a mixture of PEKK and PEI, preferably of 90-10% by weight to 60-40% by weight, in particular of 90-10% by weight to 70-30% by weight.

25. The method according to claim 24, **characterized in that** said at least one thermoplastic polymer is a polymer whose glass transition temperature is such that Tg ≥ 80°C, or a semi-crystalline polymer whose melting point Tm ≥ 150°C.

26. The method according to one of claims 1 to 25, **characterized in that** said fibrous material comprises continuous fibers selected from carbon, glass, silicon carbide, basalt, silica fibers, natural fibers, in particular flax or hemp, lignin, bamboo, sisal, silk, or cellulose fibers, in particular viscose, or amorphous thermoplastic fibers with a glass transition temperature Tg higher than the Tg of said polymer or said polymer mixture when the latter is amorphous or higher than the Tm of said polymer or said polymer mixture when the latter is semi-crystalline, or the semi-crystalline thermoplastic fibers with a melting point Tm higher than the Tg of said polymer or said polymer mixture when the latter is amorphous or higher than the Tm of said polymer or said polymer mixture when the latter is semi-crystalline, or a mixture of two or more of said fibers, preferably a mixture of carbon, glass or silicon carbide fibers, in particular carbon fibers.

**FIG.1**

Figure 1

Figure 2

83a

81a

83b

81b

82

22

Entrée d'air

20

21

Figure 3

Angle α₁

Lit fluidisé

Entrée d'air

Vue de face

Figure 4

Angle
α₁
R₁
R₂
Angle
α₂
H₁
H₂

Entrée d'air

Figure 5

Angle
α₁
R₁
R₂
Lit fluidisé
Angle
α₂₌₀

Entrée d'air

Figure 6

Figure 7

Figure 8

Figure 9

**1/9**

**1/9**

Figure 10

Figure 11

Figure 12

Figure 13

Figure 14

**EP 3 670 128 B1**

## RÉFÉRENCES CITÉES DANS LA DESCRIPTION

**Documents brevets cités dans la description**

- WO 2018115736 A
- EP 1505099 A
- WO 2015121583 A
- EP 0406067 A